(19) Europäisches Patentamt
European Patent Office
Office européen des brevets

(11) **EP 4 708 015 A1**

(12) **EUROPEAN PATENT APPLICATION**
published in accordance with Art. 153(4) EPC

(43) Date of publication:
**11.03.2026 Bulletin 2026/11**

(21) Application number: **24822182.2**

(22) Date of filing: **05.01.2024**

(51) International Patent Classification (IPC):
**G06F 3/06** (2006.01)

(52) Cooperative Patent Classification (CPC):
**G06F 3/06; G06F 8/65**

(86) International application number:
**PCT/CN2024/070858**

(87) International publication number:
**WO 2024/255221 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.06.2023 CN 202310700273**

(71) Applicant: **Huawei Technologies Co., Ltd.**
**Shenzhen, Guangdong 518129 (CN)**

(72) Inventors:
• NI, Longyu
Shenzhen, Guangdong 518129 (CN)
• YANG, Jie
Shenzhen, Guangdong 518129 (CN)

(74) Representative: **MERH-IP Matias Erny Reichl Hoffmann**
**Patentanwälte PartG mbB**
**Paul-Heyse-Straße 29**
**80336 München (DE)**

(54) **PARTITION MANAGEMENT METHOD AND DEVICE**

(57)     A partition management method and a device are provided, and relate to the field of storage technologies. The method includes: obtaining a request message used to read/write a partition included in a storage device, where the partition included in the storage device includes a user data partition and system partitions, the system partitions include a first system partition and a second system partition, the first system partition is disposed in front of the user data partition, and the second system partition is disposed behind the user data partition; and then determining, based on the request message, a target partition included in the storage device; and reading/writing the target partition. In this way, disposing a part of the system partitions behind the user data partition is equivalent to expanding a size of system partitions in front of the user data partition. If system software in the front system partitions is updated, a size of the system partitions can meet updated system software. This increases a probability of successfully updating the system software.

FIG. 12a

## Description

This application claims priority to Chinese Patent Application No. 202310700273.6, filed with the China National Intellectual Property Administration on June 13, 2023 and entitled "PARTITION MANAGEMENT METHOD AND DEVICE", which is incorporated herein by reference in its entirety.

## TECHNICAL FIELD

This application relates to the field of storage technologies, and in particular, to a partition management method and a device.

## BACKGROUND

Partitioning is an important means of dividing a storage device (for example, a disk) into areas. The storage device may be divided into several areas based on information such as a start address and a size. The several areas obtained through division may be referred to as partitions, and different partitions may be used to store different data.

Currently, partitions on the storage device include a system partition and a user data partition. The system partition may be used to store data of system software, and the like. The user data partition may be used to store data generated in a process in which a user uses the storage device. The system partition is usually disposed at the head of the storage device, and the user data partition is usually disposed at the tail of the storage device. As the system software is updated, a size of data of the system software may exceed a size of space of a corresponding system partition. Consequently, the system software fails to be updated. Therefore, how to manage the system partition to cause the size of the system partition to meet a system software update requirement is a problem that needs to be resolved.

## SUMMARY

This application provides a partition management method and a device, to expand a size of a system partition, to cause the size of the system partition to meet updated system software, and to increase a probability of successfully updating the system software.

To achieve the foregoing objective, this application uses the following technical solutions.

According to a first aspect, a partition management method is provided. The method includes: obtaining a request message, where the request message is used to read/write a partition included in a storage device, the partition includes a user data partition and a plurality of system partitions, the system partitions are used to store first-type data, the user data partition is used to store second-type data, the system partitions include a first system partition and a second system partition, the first system partition is disposed in front of the user data partition, and the second system partition is disposed behind the user data partition; determining, based on the request message, a target partition included in the storage device; and reading/writing the target partition.

The first-type data and the second-type data are different types of data.

Based on the foregoing technical solution, compared with disposing all system partitions in front of the user data partition, disposing a part of system partitions behind the user data partition is equivalent to allocating space occupied by the part of rear system partitions to front system partitions, that is, a size of space of system partitions in front of the user data partition is expanded. In this way, if software in the front system partitions is updated, a size of the system partitions can meet updated system software. This increases a probability of successfully updating the system software.

In a possible design, before obtaining the request message, both the first system partition and the second system partition are disposed in front of the user data partition. The method further includes: when space of the first system partition is insufficient, merging a part or all of space of the second system partition disposed in front of the user data partition into the space of the first system partition; and disposing the second system partition behind the user data partition. Based on this design, the second system partition disposed in front of the user data partition is disposed behind the user data partition, and then front space freed in the user data partition is allocated to the first system partition, so that a size of the system partition can be expanded. In addition, if the process is performed when the space of the first system partition is insufficient, system overheads can be reduced.

In a possible design, a start address of the user data partition remains unchanged; and disposing the second system partition behind the user data partition includes: setting first space of the user data partition as the second system partition. The first space includes continuous free space at the tail of the user data partition. Based on this design, the start address of the user data partition is not modified, storage addresses of all data in the user data partition do not need to be modified, and only an end address of the user data partition needs to be modified, so that a risk caused by modifying storage addresses of all data in the user data partition can be reduced, and time consumed for extending the system partition and system overheads can be reduced. In addition, the continuous free space at the tail of the user data partition is allocated to the second system partition, so that data in the second system partition can be read/written conveniently.

In a possible design, the first space is greater than or equal to the second system partition. Based on this design, the continuous space that is at the tail of the user data partition and that is greater than the second system partition is re-allocated to the second system partition. This is equivalent to expanding the size of space of the second system partition. In this way, when the space of the second system partition is insufficient, the space of the second system partition can be further expanded. Continuous space that is at the tail of the user data partition and that is equal to the second system partition is re-allocated to the second system partition, so that it can be ensured that there is sufficient space for storing data in the second system partition.

In a possible design, before setting the first space of the user data partition as the second system partition, the method further includes: if user data is stored in the first space, moving the user data to second space of the user data partition for storage, where the second space is different from the first space, and the second space is free space of the user data partition.

Based on this design, when data is stored in the continuous free space at the tail of the user data partition, the data in the space is moved to other free space of the user data partition, so that the continuous free space at the tail of the user data partition can be obtained, to allocate the part of space to the second system partition. In this way, the start address of the user data partition is not changed, and only the end address of the user data partition and the storage address of the moved data need to be modified, that is, the addresses of the user data partition and the addresses of all the data stored in the user data partition do not need to be all adjusted, so that a risk caused by modifying the storage address of the data in the user data partition can be reduced while time consumed for extending the system partition and system overheads are reduced.

In a possible design, the first space of the user data partition is set as the second system partition by updating a start address and an end address of the second system partition and a size of the user data partition that are included in a partition table, the partition table corresponds to the storage device, and the partition table is used to index the partition included in the storage device. Based on this design, the size of the user data partition, the start address and the end address of the second system partition, and the like that are included in the partition table corresponding to the storage device may be modified, so that the system partition is disposed behind the user data partition.

In a possible design, an updated start address of the second system partition is determined based on a size of the storage device and a size of the first space, and an updated size of the user data partition is determined based on the start address of the user data partition and the updated start address of the second system partition. Based on this design, because sizes of different storage devices are different, start addresses of system partitions disposed behind the user data partition are also different. In this way, the start address of the second system partition is determined based on the size of the storage device and the size of the first space, so that accuracy of the obtained start address of the second system partition can be improved, and accuracy of the obtained size of the user data partition can be further improved.

In a possible design, the method further includes: when space of the second system partition is insufficient, merging third space of the user data partition into the space of the second system partition. The third space includes continuous free space at the tail of the user data partition. Based on this design, when the space of the system partition disposed behind the user data partition is insufficient, the continuous free space at the tail of the user data partition is further allocated to the system partition, and the size of the system partition is extended, the start address of the user data partition is not changed, and only the end address of the user data partition and the storage address of the moved data need to be modified, that is, the addresses of the user data partition and the addresses of all the data stored in the user data partition do not need to be all adjusted, so that a risk caused by modifying the storage address of the data in the user data partition can be reduced while time consumed for extending the system partition and system overheads are reduced.

In a possible design, before merging the third space of the user data partition into the space of the second system partition, the method further includes: if user data is stored in the third space, moving the user data to fourth space of the user data partition for storage, where the fourth space is different from the third space, and the fourth space is free space of the user data partition. Based on this design, when data is stored in the continuous free space at the tail of the user data partition, the data in the space is moved to other free space of the user data partition, so that the continuous free space at the tail of the user data partition can be obtained, to allocate the part of space to the second system partition whose space is insufficient. In this way, when the size of the second system partition is expanded, the start address of the user data partition is not changed, and only the end address of the user data partition and the storage address of the moved data need to be modified, that is, the addresses of the user data partition and the addresses of all the data stored in the user data partition do not need to be all adjusted, so that a risk caused by modifying the storage address of the data in the user data partition can be reduced while time consumed for extending the system partition and system overheads are reduced.

In a possible design, before obtaining the request message, the method further includes: obtaining a partition table, where the partition table includes at least one of the following parameters: a start address and an end address of the second system partition and a size of the user data partition; and determining, based on a size of the storage device, whether to update the at least one parameter. Based on this design, because different storage devices may correspond to different partition tables, the start address and the end address of the second system partition, the size of the user data partition, and the like that are included in the storage table are corrected based on the actual size of the storage device, so that the partition table can adapt to the actual size of the storage device, and read/write performance of the storage device is ensured.

According to a second aspect, a device is provided. The device has a function of implementing the method according to any one of the first aspect and the designs of the first aspect. The function may be implemented by hardware, or may be implemented by hardware executing corresponding software. The hardware or the software includes one or more modules corresponding to the function. In a possible example, the device includes an obtaining unit (or referred to as an obtaining module) and a processing unit (or referred to as a processing module). The obtaining unit is configured to obtain a request message, where the request message is used to read/write a partition included in a storage device, the partition includes a user data partition and a plurality of system partitions, the system partitions are used to store first-type data, the user data partition is used to store second-type data, the system partitions include a first system partition and a second system partition, the first system partition is disposed in front of the user data partition, and the second system partition is disposed behind the user data partition. The processing unit is configured to determine, based on the request message, a target partition included in the storage device. The processing unit is further configured to read/write the target partition.

In a possible design, both the first system partition and the second system partition are disposed in front of the user data partition. The processing unit is further configured to: when space of the first system partition is insufficient, merge a part or all of space of the second system partition disposed in front of the user data partition into the space of the first system partition. The processing unit is further configured to dispose the second system partition behind the user data partition.

In a possible design, a start address of the user data partition remains unchanged; and the processing unit is specifically configured to set first space of the user data partition as the second system partition. The first space includes continuous free space at the tail of the user data partition.

In a possible design, the first space is greater than or equal to the second system partition.

In a possible design, the processing unit is further configured to: if user data is stored in the first space, move the user data to second space of the user data partition for storage. The second space is different from the first space, and the second space is free space of the user data partition.

In a possible design, the first space of the user data partition is set as the second system partition by updating a start address and an end address of the second system partition and a size of the user data partition that are included in a partition table, the partition table corresponds to the storage device, and the partition table is used to index the partition included in the storage device.

In a possible design, an updated start address of the second system partition is determined based on a size of the storage device and a size of the first space, and an updated size of the user data partition is determined based on the start address of the user data partition and the updated start address of the second system partition.

In a possible design, the processing unit is further configured to: when space of the second system partition is insufficient, merge third space of the user data partition into the space of the second system partition. The third space includes continuous free space at the tail of the user data partition.

In a possible design, the processing unit is further configured to: if user data is stored in the third space, move the user data to fourth space of the user data partition for storage, where the fourth space is different from the third space, and the fourth space is free space of the user data partition.

In a possible design, the obtaining unit is further configured to obtain a partition table, where the partition table includes at least one of the following parameters: a start address and an end address of the second system partition and a size of the user data partition. The processing unit is further configured to determine, based on a size of the storage device, whether to update the at least one parameter.

According to a third aspect, a device is provided, including a processor and a storage. The storage is coupled to the processor, the storage is configured to store computer program code, the computer program code includes computer instructions, and the processor reads the computer instructions from the storage, to enable the device to perform the method according to any one of the first aspect and the designs in the first aspect.

In a possible design, the device further includes a communication interface, and the communication interface may be used by the device to communicate with another apparatus. For example, the communication interface may be a transceiver, an input/output interface, an interface circuit, an output circuit, an input circuit, a pin, a related circuit, or the like.

According to a fourth aspect, a computer-readable storage medium is provided. The computer-readable storage medium includes a computer program or instructions, and when the computer program or the instructions are run on a device, the device is enabled to perform the method according to any one of the first aspect and the designs of the first aspect.

According to a fifth aspect, a computer program product is provided. When the computer program product runs on a computer, the computer is enabled to perform the method according to any one of the first aspect or the designs of the first aspect.

According to a sixth aspect, a circuit system is provided. The circuit system includes a processing circuit, and the processing circuit is configured to perform the method according to any one of the designs of the first aspect.

According to a seventh aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to the first aspect and any one of the designs of the first aspect.

It should be noted that, for technical effect achieved by any one of the designs of the second aspect to the seventh aspect, refer to the technical effect achieved by a corresponding design of the first aspect. Details are not described herein again.

## BRIEF DESCRIPTION OF DRAWINGS

FIG. 1 is a diagram of a structure of an existing GPT;
FIG. 2 is a diagram of an architecture of a file system according to an embodiment of this application;
FIG. 3 is a diagram of a structure of an existing partition;
FIG. 4 is a diagram of an architecture of an existing file system;
FIG. 5 is a diagram of an existing interface for adjusting a size of a system partition;
FIG. 6 is a diagram of a structure of a device according to an embodiment of this application;
FIG. 7 is a diagram of an architecture of a centralized storage system according to an embodiment of this application;
FIG. 8 is a diagram of a structure of another device according to an embodiment of this application;
FIG. 9 is a block diagram of a software structure of a device according to an embodiment of this application;
FIG. 10 is a diagram of a scenario in which data in a user data partition is moved according to an embodiment of this application;
FIG. 11 is a diagram of a partition structure according to an embodiment of this application;
FIG. 12a is a diagram of a scenario of a partition management method according to an embodiment of this application;
FIG. 12b is a diagram of a scenario of another partition management method according to an embodiment of this application;
FIG. 13 is a diagram of a scenario of updating a partition table according to an embodiment of this application;
FIG. 14 is a schematic flowchart of a partition management method according to an embodiment of this application;
FIG. 15 is a schematic flowchart of another partition management method according to an embodiment of this application;
FIG. 16 is a schematic flowchart of another partition management method according to an embodiment of this application;
FIG. 17 is a diagram of a structure of another device according to an embodiment of this application; and
FIG. 18 is a diagram of a structure of a chip system according to an embodiment of this application.

## DESCRIPTION OF EMBODIMENTS

In the description of this application, unless otherwise specified, the character "/" indicates that associated objects are in an "or" relationship. For example, A/B may indicate A or B. The term "and/or" in this application merely describes an association relationship between associated objects and indicates that three relationships may exist. For example, A and/or B may indicate three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, and a and b and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, terms such as "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Features, structures, or characteristics in this application may be combined in one or more embodiments in any appropriate manner. Sequence numbers of the processes do not mean execution sequences in various embodiments of this application. The execution sequences of the processes should be determined based on functions and internal logic of the processes, and should not be construed as any limitation on implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, for same or similar parts in embodiments, refer to each other. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. Implementations of this application are not intended to limit the protection scope of this application.

In addition, a network architecture and a service scenario that are described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

It may be understood that embodiments of this application are described by using an example in which the storage device is divided into a system partition and a user data partition, the system partition is used to store data of system software, and the user data partition is used to store a partition structure of data generated in a process in which a user uses the storage device. The technical solutions provided in embodiments of this application are also applicable to a partition architecture in which the storage device is divided into two different types of partitions, and the two different types of partitions are respectively used to store different types of data. It may be further understood that a name of a partition does not constitute a limitation on a function of the partition.

For ease of understanding, the following first describes technical terms and related concepts that may be used in embodiments of this application.

1. Partitioning

Partitioning is an important means of dividing a storage device (for example, a disk) into areas. The storage device may be divided into several areas based on information such as a start address and a size. The several areas obtained through division may be referred to as partitions, and different partitions may be used to store different data.

In some partition architectures, the partitions on the storage device include a system partition and a user data partition. The system partition may be used to store data of system software, and the data of the system software may be used to implement some system functions. For example, the system partition may include a FASTBOOT partition, an NV partition, a MODEM partition, a KERNEL partition, a SYSTEM partition, a VENDOR partition, a PRODUCT partition, and the like. Data stored in the FASTBOOT partition may be used for device system startup and the like. In some embodiments, the device may be a device on which the storage device is installed. The NV partition is used to store some information of the device, such as a radio frequency parameter. Data stored in the MODEM partition may be used by the device to implement a communication function. The KERNEL partition may be used to store an image file of a system kernel. The SYSTEM partition, the VENDOR partition, and the PRODUCT partition may be used to store data related to an upper-layer operating system, such as pre-installed applications, executable programs, and system services.

The user data partition may be used to store data generated in a process in which a user uses the storage device.

2. Partition table

The partition table is a skeleton that supports normal operation of a storage device (for example, a disk). The storage device may be divided into several partitions based on the partition table, and the partition table may be used to record related information of each partition. Optionally, the partition table may be stored at the head of the storage device.

Currently, types of partition tables include a master boot record (master boot record, MBR) partition table and a globally unique identifier partition table (GUID partition table, GPT). The MBR partition table is used as a partition table corresponding to a conventional partitioning scheme, and partition information is stored in 64 bytes in a first sector of the storage device, so that a quantity of partitions on the storage device that can be indicated is limited.

As a partition table corresponding to a new partitioning scheme, the GPT divides the storage device by using a logical block address (logical block address, LBA) as a unit, and records partition information. Compared with the MBR, the GPT can indicate more partitions on the storage device.

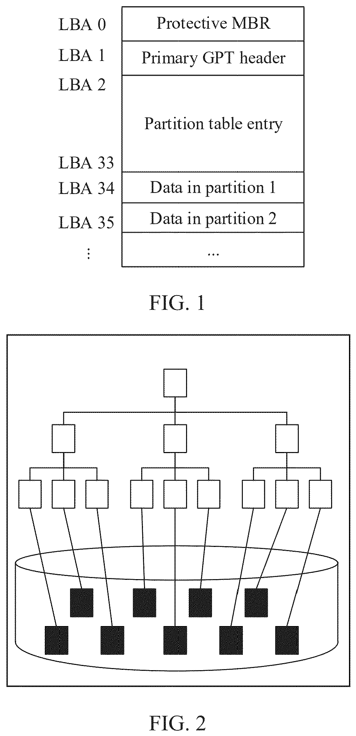

For example, FIG. 1 is a diagram of a structure of an existing GPT. As shown in FIG. 1, an MBR of a conventional partitioning scheme is stored at a head location LBA 0 of the GPT, and the MBR may be referred to as a protective (protective) MBR. An LBA 1 is a primary GPT header (primary GPT header), and available space of a storage device, a size of each partition entry, and a quantity of partition entries, and the like are stored at the LBA 1. Partition table entries are stored at an LBA 2 to an LBA 33. One partition table entry indicates information about one partition, such as a partition type, a start address, an end address, a partition name, and a partition attribute. Data of each partition, for example, data of a partition 1 and data of a partition 2, is stored following the LBA 33.

3. File system

The file system is a method and data structure used by the operating system of a device to specify files on a storage device partition. A file system is structured data file storage and an organization form. For example, FIG. 2 is a diagram of a structure of a file system according to an embodiment of this application.

In a computer, all data is valued 0 or 1. A series of 01 combinations stored on a hardware medium are completely indistinguishable and unmanageable for the computer. Therefore, the computer organizes the data by using a concept of "files". For example, the computer organizes, based on structures required by different applications, data used for a same purpose into different types of files. Usually, different suffixes are used to refer to different types, and the computer gives each file a name that is easy to understand and remember.

When there are a large quantity of files, the computer groups the files (such as the white blocks shown in FIG. 2) according to a division method, and each group of files is stored in a same catalog (or a folder, such as the black block shown in FIG. 2). In addition to the files, a catalog may include a lower-level catalog (that is, a subcatalog or a subfolder). All the files and catalogs form a tree structure. The tree structure has a special name: file system (File System). There are many types of file systems. Common file systems are FAT/FAT32/NTFS in Windows, and EXT2/EXT3/EXT4/XFS/BtrFS in Linux.

Generally, the file system includes two parts: meta(meta)data and file data. The metadata includes attribute information of the file system, for example, a type and a size of the file system, and an index of file data stored in the file system. The file data is actual content of a file stored in the file system.

In a current partitioning solution, a system partition is disposed at the head of a storage device, and a user data partition is disposed at the tail of the storage device. In some scenarios, the storage device may have different configuration versions. Storage devices of different configuration versions may have different capacities, and specified partition sizes may also be different. However, to ensure reliability of data in the user data partition, on storage devices with different configurations, start addresses (or referred to as start locations on the storage devices) of the user data partition are the same.

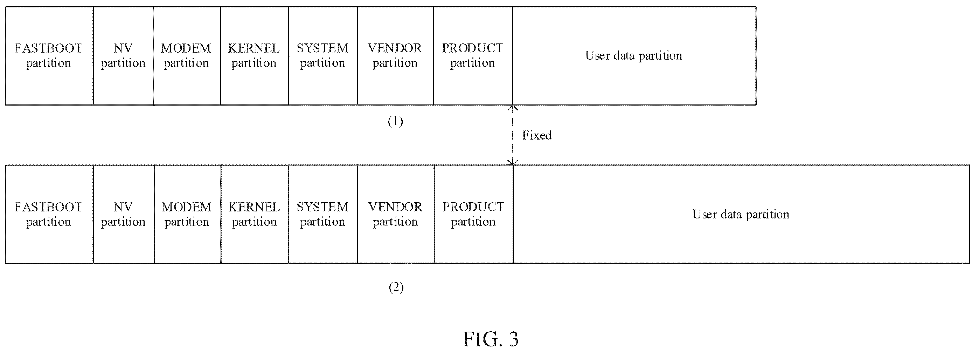

For example, a capacity of a storage device of a low configuration version is 128 G (gigabyte, GB, G for short), and a capacity of a storage device of a high configuration version is 256 G, for example, the system partition includes a FASTBOOT partition, an NV partition, a MODEM partition, a KERNEL partition, a SYSTEM partition, a VENDOR partition, a PRODUCT partition, and the like. FIG. 3 is a diagram of a structure of an existing partition.

(1) in FIG. 3 is a diagram of a structure of a partition disposed on a 128 G storage device, and (2) in FIG. 3 is a diagram of a structure of a partition disposed on a 256 G storage device. As shown in (1) in FIG. 3 and (2) in FIG. 3, system partitions are disposed at the head of the storage device, and user data partitions are disposed at the tail of the storage device. In addition, a start address of a user data partition on the 128 G storage device is the same as a start address of a user data partition on the 256 G storage device, but sizes of the user data partitions are different, for example a size of the user data partition on the 128 G storage device is less than a size of the user data partition on the 256 G storage device.

During the use of the device, the system software on the device may be updated to provide better user experience. However, as system software is updated, data of the system software may exceed a size of a corresponding system partition. An image file stored in the MODEM partition shown in FIG. 3 is used as an example. Because system software corresponding to the image file is updated, the image file becomes larger, and a size of the MODEM partition may be insufficient to store an enlarged image file. In this way, the system software may fail to be updated. In other words, the system software cannot be updated in time, thereby affecting user experience.

In an existing solution, when the system partition is disposed, space is reserved in the system partition to meet a system software update requirement. For example, when a system partition is disposed, a part of free space is reserved in the system partition. Alternatively, a part of free space is reserved on the storage device, and when the size of the system partition is insufficient, the reserved free space is used as the space of the system partition. In this solution, because the data size of the updated system software cannot be estimated, the reserved free space may still be insufficient, or the reserved free space is excessively large. As a result, space for storing the user data is reduced, and user experience is affected.

In another solution, a hierarchical file system (hierarchical file system plus, HFS+) is evolved into an apple file system (apple file system, APFS), and a storage area runtime sharing capability provided by the APFS is used to resolve the foregoing problem. The runtime sharing capability of the storage area refers to adding a virtual volume management layer. One partition may have a plurality of virtual volumes (volumes), and space of the partition may be allocated to any virtual volume in the plurality of virtual volumes for use.

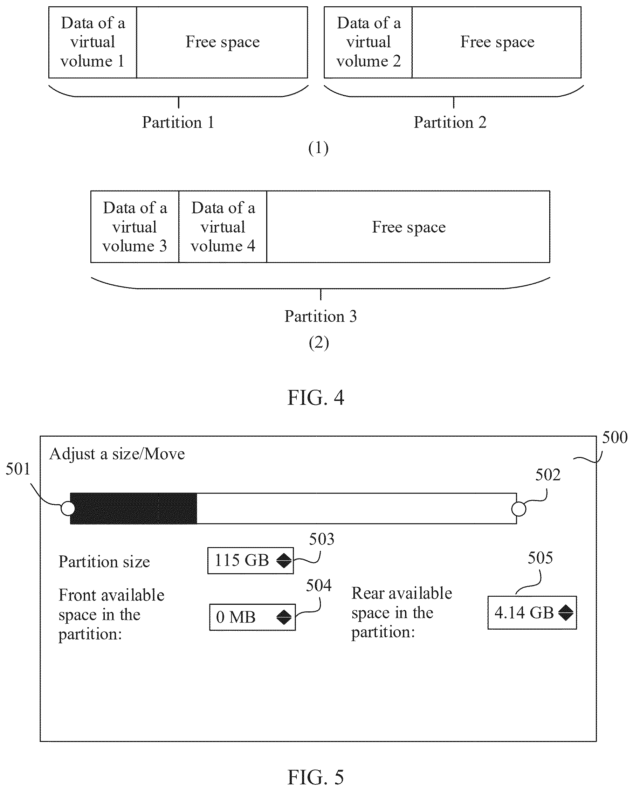

For example, (1) in FIG. 4 is a diagram of a structure of an existing HFS+. As shown in (1) in FIG. 4, one partition corresponds to one virtual volume, and space of the partition may be allocated only to the corresponding virtual volume for use. For example, space of a partition 1 may be allocated to a virtual volume 1 for use, and space of a partition 2 may be allocated to a virtual volume 2 for use. (2) in FIG. 4 is a diagram of a structure of an existing APFS file system. As shown in (2) in FIG. 4, one partition corresponds to a plurality of virtual volumes, and space of the partition may be allocated to the plurality of virtual volumes for use. For example, space of a partition 3 may be allocated to both a virtual volume 3 and a virtual volume 4 for use.

In this solution, an added virtual volume management layer causes a performance loss during running.

In still another solution, in an architecture in which the system partition and the user data partition are not isolated, the foregoing technical problem is resolved by adjusting sizes of the system partition and the user data partition. It may be understood that the architecture in which the system partition and the user data partition are not isolated means that both the system partition and the user data partition may store data generated in a process in which the user uses the device and data of system software. For example, FIG. 5 is a diagram of an existing interface for adjusting a size of a system partition. As shown in FIG. 5, an adjustment interface 500 of a partition includes an adjustment button 501 and an adjustment button 502. A size of the corresponding partition may be adjusted by dragging the adjustment button 501 and/or the adjustment button 502 leftward or rightward. The adjustment interface 500 may further include one or more adjustment options, for example, a partition size 503, a front available space 504 in the partition, and a rear available space 505 in the partition. The size of the partition may also be adjusted through these adjustment options.

First, this solution is not applicable to a partition structure in which a system partition and a user data partition are isolated. To be specific, the system partition is used only to store data of system software, and the user data partition is used only to store a partition structure of data generated in a process in which a user uses a device. In addition, in this solution, the user adjusts a size of the system partition and/or a size of the user data partition, and operations are complex. In addition, in a process of adjusting the partition size, the user may modify the start address of the user data partition. In this case, storage addresses of all data stored in the user data partition need to be recalculated and refreshed. This process takes a long time, and system overheads are high.

Based on this, an embodiment of this application provides a partition management method. A part of system partitions are disposed at the tail of a storage device, so that a size of the system partition can be expanded, and a size of the system partition can meet updated system software. This increases a probability of successfully updating the system software, time consumed for expanding the system partition and system overheads can be reduced.

The technical solutions provided in embodiments of this application may be applied to a device 600, or may be applied to a system including the device 600.

The device 600 may be various types of terminal devices such as an embedded device, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device.

For another example, the device 600 may be a network device, for example, a NodeB (NodeB, NB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission/reception point (transmission/reception point, TRP), or may be a gNB or a transmission point (TRP or TP) in a 5G system like an NR system, or a network node, for example, a baseband unit (BBU) or a distributed unit (distributed unit, DU), that constitutes a gNB or a transmission point, or a satellite.

For still another example, the device 600 in this application may be a module, a module unit, a component, a chip, or the like built in any device as one or more components or units.

In some embodiments, the device 600 may be a fixed device, or may be a portable device.

Optionally, an operating system installed on the device 600 includes but is not limited to iOS®, Android®, Harmony®, Linux®, or another operating system. A specific type of the device 600 and the operating system installed on the device are not limited in this application.

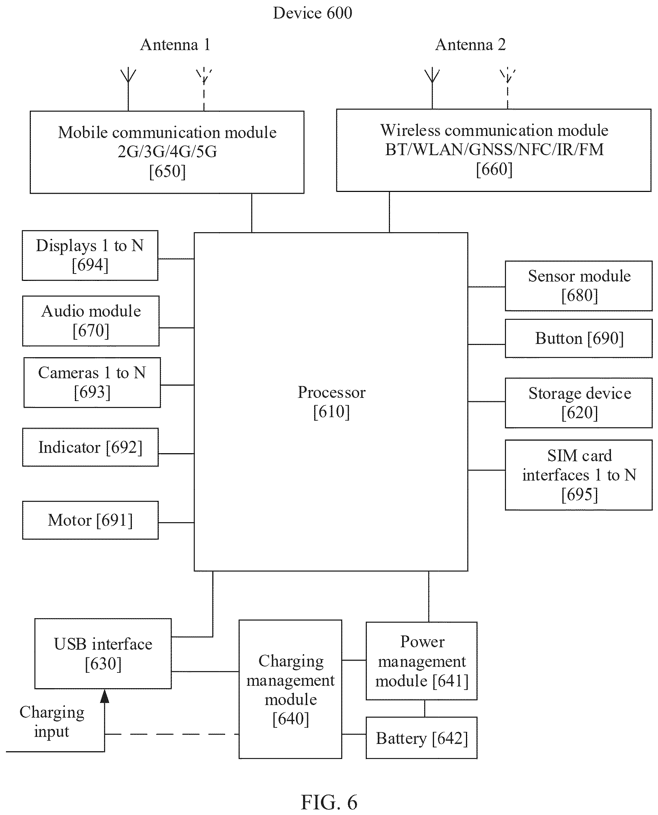

For example, the device 600 is a mobile phone. FIG. 6 is a diagram of a structure of a device 600 according to an embodiment of this application.

As shown in FIG. 6, the device 600 may include a processor 610, a storage device 620, a universal serial bus (universal serial bus, USB) interface 630, a charging management module 640, a power management module 641, a battery 642, an antenna 1, an antenna 2, a mobile communication module 650, a wireless communication module 660, an audio module 670, a sensor module 680, a button 690, a motor 691, an indicator 692, a camera 693, a display 694, and a subscriber identity module (subscriber identification module, SIM) card interface 695.

The processor 610 may include one or more processing units. For example, the processor 610 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to complete control of instruction fetching and instruction execution.

A storage may be further disposed in the processor 610, and is configured to store instructions and data. In some embodiments, the storage in the processor 610 is a cache. The storage may store instructions or data that has been used or cyclically used by the processor 610. If the processor 610 needs to use the instructions or the data again, the processor may directly invoke the instructions or the data from the storage. This avoids repeated access, reduces waiting time of the processor 610, and improves system efficiency.

In some embodiments, the processor 610 may include one or more interfaces.

The charging management module 640 is configured to receive a charging input from a charger. The charger may be a wireless charger, or may be a wired charger.

The power management module 641 is configured to connect the battery 642, the charging management module 640, and the processor 610. The power management module 641 receives an input from the battery 642 and/or the charging management module 640, and supplies power to the processor 610, the storage device 620, the display 694, the camera 693, the wireless communication module 660, and the like.

A wireless communication function of the device 600 may be implemented through the antenna 1, the antenna 2, the mobile communication module 650, the wireless communication module 660, the modem processor, the baseband processor, and the like.

The antenna 1 and the antenna 2 are configured to transmit and receive an electromagnetic wave signal. Each antenna in the device 600 may be configured to cover one or more communication frequency bands. Different antennas may be further reused, to improve antenna utilization. For example, the antenna 1 may be reused as a diversity antenna of a wireless local area network. In some other embodiments, an antenna may be used in combination with a tuning switch.

The mobile communication module 650 may provide a wireless communication solution that is applied to the device 600 and that includes 2G/3G/4G/5G or the like. The mobile communication module 650 may include at least one filter, a switch, a power amplifier, a low noise amplifier (low noise amplifier, LNA), and the like.

The wireless communication module 660 may provide a wireless communication solution that is applied to the device 600 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 650 in the device 600 are coupled, and the antenna 2 and the wireless communication module 660 in the device 600 are coupled, so that the device 600 can communicate with a network and another device by using a wireless communication technology.

The device 600 implements a display function through the GPU, the display 694, the application processor, and the like. The display 694 is configured to display an image, a video, and the like. The display 694 includes a display panel. The camera 693 is configured to capture a static image or a video.

The storage device 620 may be configured to store computer executable program code, where the executable program code includes instructions. The storage device 620 may include a program storage area and a data storage area. The program storage area may store an operating system, an application required by at least one function (for example, a sound playing function or an image playing function), and the like. The data storage area may store data (such as audio data and a phone book) created during use of the device 600, and the like. In some embodiments, the storage device 620 and the device 600 may be integrated together. For example, the storage device 620 may be used as one or more components or units and built into a module, a module unit, a component, a chip, or the like in the device 600. In some other embodiments, the storage device 620 and the device 600 may be disposed separately and independently.

For example, the storage device 620 may be various storages in which a system partition is separated from a user data partition. For example, the storage device 620 may include a high-speed random access memory, and may further include a nonvolatile memory, for example, at least one magnetic disk storage device, a flash memory component, a universal flash storage (universal flash storage, UFS), a hard disk drive (hard disk drive, HDD), a solid state drive (solid state drive, SSD), a shingled magnetic recording (shingled magnetic recording, SMR) disk, an SSD that supports zoned namespace (zoned namespace, ZNS), or another storage like a persistent memory (persistent memory, PMEM). The processor 610 runs the instructions stored in the storage device 620 and/or the instructions stored in the storage disposed in the processor, to perform various function applications of the device 600 and data processing.

In some embodiments of this application, the device 600 may divide the storage device 620 into different partitions in a partition table manner, and different partitions store different data. In some embodiments, the storage device 620 may include a system partition and a user data partition. For example, the system partition may be the foregoing program storage area, and the user data partition may be the foregoing data storage area.

Optionally, in this embodiment of this application, a storage system used by the device 600 or the like may be a centralized storage system or a distributed storage system. The centralized storage system features a unified portal, and all data from an external device passes through this portal. This portal is an engine of the centralized storage system. The engine is a core component of the centralized storage system, and many advanced functions of the storage system are implemented in the engine.

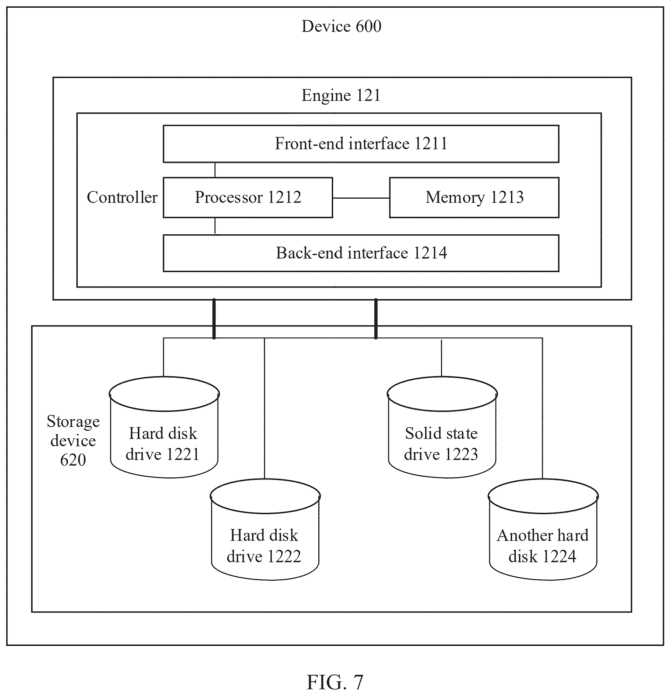

For example, FIG. 7 is a diagram of an architecture of a centralized storage system according to an embodiment of this application.

As shown in FIG. 7, an engine 121 may include one or more controllers. An example in which the engine 121 includes one controller is used for description in FIG. 7. In a possible example, if the engine 121 includes a plurality of controllers, a mirror channel may exist between any two controllers, to implement a function of mutual backup of any two controllers. This avoids unavailability of the entire device 600 caused by a hardware fault.

The engine 121 further includes a front-end interface 1211 and a back-end interface 1214. The front-end interface 1211 is configured to communicate with another apparatus. The back-end interface 1214 is configured to communicate with the storage device 620, to expand a capacity of the device 600. The engine 121 may be connected to more storage devices 620 through the back-end interface 1214, to form a large storage resource pool.

In terms of hardware, as shown in FIG. 7, the controller includes at least a processor 1212 and a memory 1213. The processor 1212 is a central processing unit (central processing unit, CPU), configured to process a data access request from outside the device 600 (the server or another storage system), and also configured to process a request generated inside the device 600. For descriptions of the processor 1212, refer to the foregoing descriptions of the processor 610.

For example, when receiving, through the front-end interface 1211, data write requests sent by the another apparatus, the processor 1212 temporarily stores, in the memory 1213, data in the data write requests. When a total amount of data in the memory 1213 reaches a specific threshold, the processor 1212 sends, through the back-end port, the data stored in the memory 1213 to the storage device 620 for persistent storage. In FIG. 7, an example in which the storage device 620 includes a hard disk drive (hard disk drive, HDD) 1221, a hard disk drive 1222, a solid state disk (solid state drive, SSD) 1223, or another hard disk 1224 is used.

The memory 1213 is an internal storage that directly exchanges data with the processor. The memory 1213 can read/write the data at a high speed at any time, and serves as a temporary data storage of an operating system or another running program. The memory includes at least two types of storages. For example, the memory may be a random access memory like a DRAM or an SCM, or may be a read-only memory (Read Only Memory, ROM). In actual application, a plurality of memories 1213 and different types of memories 1213 may be configured in the controller. A quantity and types of memories 1213 are not limited in this embodiment. In addition, the memory 1213 may be configured to have a power protection function. The power protection function means that data stored in the memory 1213 is not lost when the system is powered off and then powered on again. A memory having the power protection function is referred to as a nonvolatile memory.

The memory 1213 stores a software program, and the processor 1212 may run the software program in the memory 1213 to manage the storage 620.

In addition, FIG. 7 shows only one engine 121. However, in actual application, the storage system may include two or more engines 121, and redundancy or load balancing is performed between the plurality of engines 121.

The audio module 670 is configured to convert digital audio information into an analog audio signal output, and is further configured to convert an analog audio input into a digital audio signal. The button 690 includes a power button, a volume button, and the like. The button 690 may be a mechanical button, or may be a touch button.

The motor 691 may generate a vibration prompt.

The indicator 692 may be an indicator light, and may be configured to indicate a charging status and a power change, or may be configured to indicate a message, a missed call, a notification, and the like.

The SIM card interface 695 is configured to connect to a SIM card.

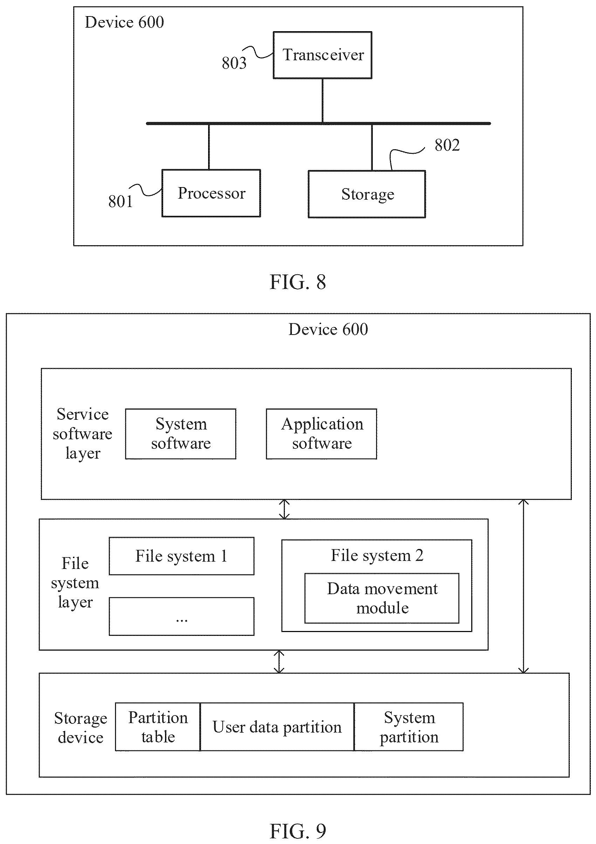

For example, the foregoing merely uses the mobile phone as an example to describe a structure of the device 600 in embodiments of this application, but does not constitute a limitation on a structure and a form of the device 600. The structure and the form of the device 600 are not limited in embodiments of this application. For example, FIG. 8 shows another example structure of the device 600. As shown in FIG. 8, the device 600 includes a processor 801, a storage 802, and a transceiver 803. For implementations of the processor 801 and the storage 802, refer to the implementations of the processor and the storage device shown in FIG. 6. The transceiver 803 may be used by the device 600 to interact with another device (for example, an electronic device). The transceiver 803 may be a component based on Wi-Fi, Bluetooth, or another communication protocol.

It may be understood that the structure shown in embodiments of this application does not constitute a specific limitation on the device 600. In some other embodiments of this application, the device 600 may include more or fewer components than those shown in the FIG. 6 and FIG. 8, or a combination of a part of the components, or splits from a part of the components, or an arrangement of different components. The components shown in the figure may be implemented by hardware, software, or a combination of software and hardware.

In some embodiments, a software architecture of the device 600 may use a layered architecture, an event-driven architecture, a microkernel architecture, a microservice architecture, or a cloud architecture. In embodiments of this application, a layered architecture is used as an example to describe a software structure of the device 600.

FIG. 9 is a block diagram of a software structure of a device 600 according to an embodiment of this application.

In a layered architecture, software is divided into several layers, and each layer has a clear role and task. The layers communicate with each other through a software interface. In some embodiments, the software structure of the device 600 may include three layers from bottom to top: a storage device layer, a file system layer, and a service software layer.

In some embodiments, the storage device may be divided into different partitions, and the different partitions may be used to store different data. For example, these partitions may include a system partition and a user data partition. For descriptions of the system partition and the user data partition, refer to the foregoing descriptions.

In some embodiments of this application, a part of system partitions may be disposed in front of the user data partition, and a part of system partitions may be disposed behind the user data partition (not shown in the figure).

In some embodiments, the storage device may include a partition table, and the partition table may be used to record related information of each partition. Optionally, the partition table may be stored at the head of the storage device. Currently, the partition table may alternatively be stored in another location of the storage device. This is not limited in embodiments of this application.

The file system layer may be used to manage a file on the storage device. In some embodiments, the file system layer may include one or more file systems such as a file system 1 and a file system 2. In some embodiments, different partitions may correspond to different file systems, and each file system may manage data in a corresponding partition.

In some embodiments, a file system (for example, the file system 2) corresponding to the user data partition may include a data movement module, and the data movement module may move rear data stored in the user data partition to front free space of the user data partition. For example, the data movement module may store the data in a front location in the user data partition based on a storage address of the rear data stored in the user data partition.

For example, in a specific implementation, the data movement module may move the data in the user data partition based on a garbage collection (garbage collection, GC) function included in a log-structured (log-structured) feature of the file system. The GC function may be used to reclaim free space (such as an invalid block (invalid block)) in the user data partition. The data movement module may perform, based on the GC function, directional movement on the data stored in the user data partition, for example, move the data stored at the tail of the user data partition to front free space (such as an invalid block (invalid block)) in the user data partition, and when the free space of the user data partition is reclaimed, the data movement module may further spare space at the tail of the user data partition.

In some embodiments, the data movement module may be further configured to modify an address range of the user data partition managed by the file system, to modify a size of the user data partition.

It may be understood that, in the foregoing embodiment, an example in which the data movement module is located in the file system corresponding to the user data partition is used. In another embodiment, the data movement module may alternatively be directly located at the file system layer. A specific location of the data movement module is not limited in embodiments of this application. In another embodiment, the data movement module may also be referred to as a garbage collection (garbage collection, GC) module. It may be understood that the name does not constitute a limitation on a function.

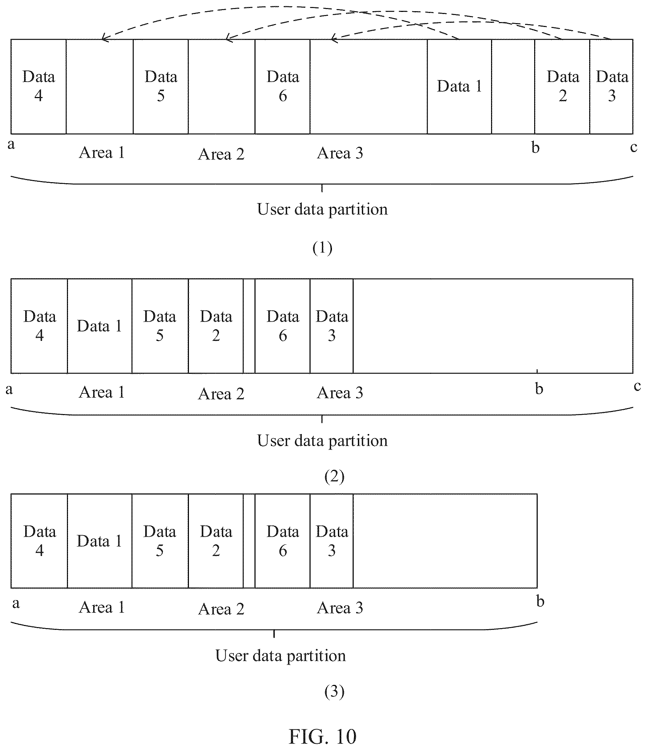

For example, FIG. 10 is a diagram of a scenario in which data in a user data partition is moved according to an embodiment of this application. As shown in (1) in FIG. 10, a data movement module may respectively move data 1, data 2, and data 3 to an area 1, an area 2, and an area 3 in the user data partition. In response to the movement operation, a data storage status of the user data partition may be shown in (2) in FIG. 10.

Optionally, after the data movement module moves the data in the user data partition, the data in the user data partition may be continuously stored, or may not be continuously stored.

Further, the data movement module may further modify an address management range of a file system corresponding to the user data partition. For example, the address management range of the file system corresponding to the user data partition shown in (1) in FIG. 10 is from an address a to an address c. After the data movement module deletes the address b to the address c from the address management range of the file system, the address management range of the file system changes from the address a to the address b. Correspondingly, a size of the user data partition changes to the size shown in (3) in FIG. 10.

The service software layer may include various types of service software. For example, the service software may include but is not limited to system software and application software. For example, the system software may include but is not limited to a pre-installed application, an executable program, a system service, and the like of the device 600. The pre-installed application may be an application installed on the device 600 before delivery. The application software may refer to software and a program installed by a user in a process of using the device 600 after the device 600 is delivered from a factory, data generated in a process of using the system software, and the like. For example, the application software includes but is not limited to a third-party application, an executable program, and user data (such as a phone book, an SMS message, a video, a photo, and a message).

In some embodiments, data of different types of service software may be stored in different partitions. For example, the data of the system software may be stored in the foregoing system partition. The data of the application software may be stored in the user data partition.

In some embodiments of this application, when the system software at the service software layer is updated, if it is determined that space of a system partition that is on the storage device and that is used to store the system software data is insufficient to store updated system software data, a parameter that is of the system partition and that is stored in the partition table on the storage device may be modified, such as a size, a start address, or an end address, to expand the size of the system partition; and/or the data in the user data partition is moved via the data movement module at the file system layer, to allocate free space of the user data partition to the system partition whose space is insufficient, so as to expand a size of the system partition.

It may be understood that the architecture shown in FIG. 9 is merely an example, and is merely used as a logical architecture. During actual implementation, the architecture may be divided in another manner, for example, may include more or fewer layers. Alternatively, the system architecture of the device 600 may be divided into functional modules, and each functional module is obtained through division based on each function. Alternatively, two or more functions may be integrated into one processing unit. The integrated unit may be implemented in a form of hardware, or may be implemented in a form of software functional module.

All technical solutions in the following embodiments may be implemented in devices with structures shown in FIG. 6, FIG. 8, FIG. 9, and the like.

It may be understood that, in the following embodiments, an example in which the device 600 is a mobile phone and the storage device 620 is a storage device is used for description. It may be further understood that the partition management method provided in this embodiment of this application may be performed by a mobile phone, or may be performed by a processor in the mobile phone, for example, a chip.

An embodiment of this application provides a partition management method. A part of system partitions located at the head of a storage device are disposed at the tail of the storage device. In this way, a size of the system partition can be expanded. If system software stored in the system partition is updated, a size of the system partition can meet updated system software. This increases a probability of successfully updating the system software.

In some embodiments, a part or all of a first-type system partition located in front of the storage device may be disposed at the tail of the storage device. A second-type system partition located in front of the storage device is still disposed at the head of the storage device. Optionally, there may be one or more first-type system partitions and one or more second-type system partitions.

The first-type system partition may be a partition used for running of a mobile phone, for example, including but not limited to an NV partition, a MODEM partition, a KERNEL partition, a SYSTEM partition, a VENDOR partition, and a PRODUCT partition. It may be understood that data in the first-type system partition is data that needs to be loaded when the mobile phone runs. Disposing the first-type system partition at the tail of the storage device does not affect startup of the mobile phone.

The second-type system partition may be a partition used for startup of the mobile phone, complete power-on, and complete operations such as partition table parsing, for example, including but not limited to an XLOADER partition and a FASTBOOT partition. The XLOADER partition may be located at a start address (for example, an address 0) of the storage device. The XLOADER partition may be used to perform some initialization operations on the storage device, for example, parse a partition table to obtain an address of the FASTBOOT partition, and then load and start the FASTBOOT partition, and the FASTBOOT partition completes a subsequent startup process of the mobile phone. Certainly, an address of another partition on the storage device may also be obtained by parsing the partition table. It may be understood that data in the second-type system partition is data that needs to be loaded when the mobile phone is started. Because a location of each partition on the storage device cannot be determined when the mobile phone is started, the data is loaded and executed from the head of the storage device. In this way, the second-type system partition is still disposed at the head of the storage device, so that the data can be loaded when the mobile phone is started, to complete successful startup of the mobile phone, for example, a power-on process. In addition, the partition table is parsed by loading the second-type system partition, so that an address of another partition on the storage device can be obtained, to load data of each partition during subsequent running of the mobile phone.

In a specific embodiment, a part or all of the first-type system partition may be specifically disposed at the very end of the storage device. It may be understood that, disposing at the very end of the storage device may mean that an end address of the storage device is an end address of a first-type system partition.

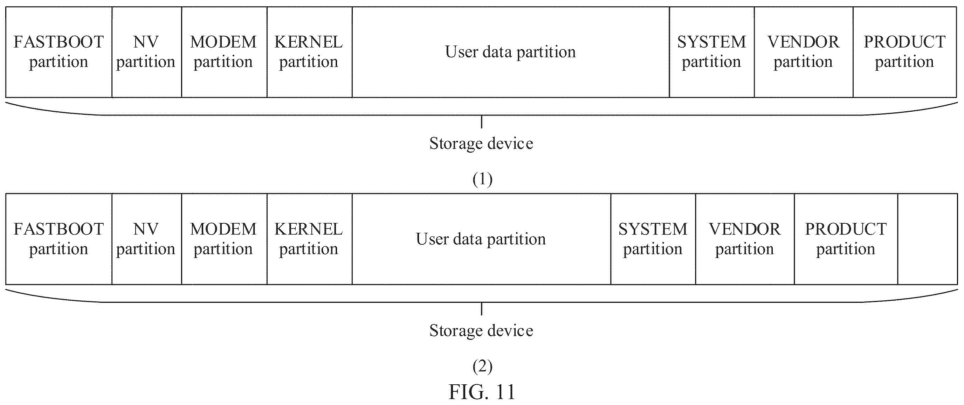

For example, the first-type system partition includes the NV partition, the MODEM partition, the KERNEL partition, the SYSTEM partition, the VENDOR partition, and the PRODUCT partition, and the second-type system partition includes the FASTBOOT partition. (1) in FIG. 11 is a diagram of a structure of a storage device partition according to an embodiment of this application. As shown in (1) in FIG. 11, the FASTBOOT partition, the NV partition, the MODEM partition, and the KERNEL partition are disposed at the head of the storage device, the SYSTEM partition, the VENDOR partition, and the PRODUCT partition are disposed at the very end of the storage device, and an end address of the PRODUCT partition is the end address of the storage device.

In another specific embodiment, a part or all of the first-type system partition may be specifically disposed at a location that is a preset size away from the very end of the storage device. It may be understood that being disposed at a location that is a preset size away from the very end of the storage device may mean that the location that is the preset size away from the end address of the storage device is an end address of a first-type system partition. Optionally, the preset size may be set by a developer based on an actual requirement. This is not limited in embodiments of this application.

For example, the first-type system partition still includes the NV partition, the MODEM partition, the KERNEL partition, the SYSTEM partition, the VENDOR partition, and the PRODUCT partition, and the second-type system partition includes the FASTBOOT partition. (2) in FIG. 11 is a diagram of a structure of another storage device partition according to an embodiment of this application. As shown in (2) in FIG. 11, the FASTBOOT partition, the NV partition, the MODEM partition, and the KERNEL partition are disposed at the head of the storage device, the SYSTEM partition, the VENDOR partition, and the PRODUCT partition are disposed at a location that is a preset size away from an end of the storage device, and the end address of the PRODUCT partition is a location of a preset size away from the end address of the storage device.

In some scenarios, before the mobile phone is delivered from a factory, a partition structure shown in FIG. 11 is used.

In this scenario, in some embodiments, a size of each system partition may be preset. In some other embodiments, the size of each system partition may be determined based on an increase status of data stored in the system partition. For example, if data stored in a system partition increases greatly and/or data increases frequently, the system partition may be set to be large. If a storage device in a system partition increases little, and/or data does not increase frequently, the system partition may be set to be small.

In some other scenarios, before the mobile phone is delivered from a factory, the partition structure shown in FIG. 3 is used. In this scenario, to enable the size of the system partition to meet updated system software, a probability of successfully updating the system software is increased. The mobile phone may convert the partition structure shown in FIG. 3 into the partition structure shown in FIG. 11. For example, the mobile phone may dispose a part of system partitions located in the storage device at the tail of the storage device by modifying indexes of the system partition and the user data partition in the partition table, for example, a start address, an end address, and a partition size. In some embodiments, after an index of the user data partition is modified, an address management range of a file system corresponding to the user data partition further needs to be modified, so that an address range managed by the file system corresponding to the user data partition is a modified address range of the user data partition.

It may be understood that, in this scenario, for system partitions that are still disposed at the head of the storage device, locations of some system partitions may not change, and locations of some system partitions may change. For example, after the structure of the partition shown in FIG. 3 is converted into the partition structure shown in (1) in FIG. 11, for example, a location of the KERNEL partition and a location of the MODEM partition change, a start address of the KERNEL partition changes, or an end address of the MODEM partition changes, and the locations of the FASTBOOT partition, NV partition, and the like do not change.

Optionally, locations of the system partitions that are still disposed at the head of the storage device may also be changed. Optionally, whether a location of a system partition that is still disposed at the head of the storage device changes may be determined based on an increase status of data in the storage device in the system partition and/or an increase status of data in another system partition that is still stored at the head of the storage device. For example, if data stored in a system partition increases greatly and/or data increases frequently, the system partition may be expanded, and another system partition may be reduced. If data of a storage device in a system partition increases slightly, and/or data increases infrequently, the system partition may be reduced, another system partition may be expanded, or the like.

In some embodiments, because system software stored in the system partition may be updated irregularly, and a size of the system partition may be insufficient to store updated system software, space of the system partition may be insufficient. Therefore, in this scenario, before the mobile phone converts the partition structure shown in FIG. 3 into the partition structure shown in FIG. 11, the mobile phone may further first determine whether space of several system partitions disposed at the head of the storage device is insufficient. When the mobile phone determines that space of a part or all of the system partitions is insufficient, the mobile phone performs the foregoing conversion operation. On the contrary, when the mobile phone determines that space of all the system partitions is sufficient, the mobile phone may not perform the foregoing conversion operation. In this way, system overheads of the mobile phone can be reduced while a probability of successfully updating the system software is increased.

Optionally, in this embodiment, the mobile phone may adjust a system partition whose space is not insufficient to the tail of the storage device, and retain a system partition whose space is insufficient to the head of the storage device. In this way, more free space at the head of the storage device may be re-allocated to a system partition whose space is insufficient, so that the system partition whose space is insufficient can be expanded.

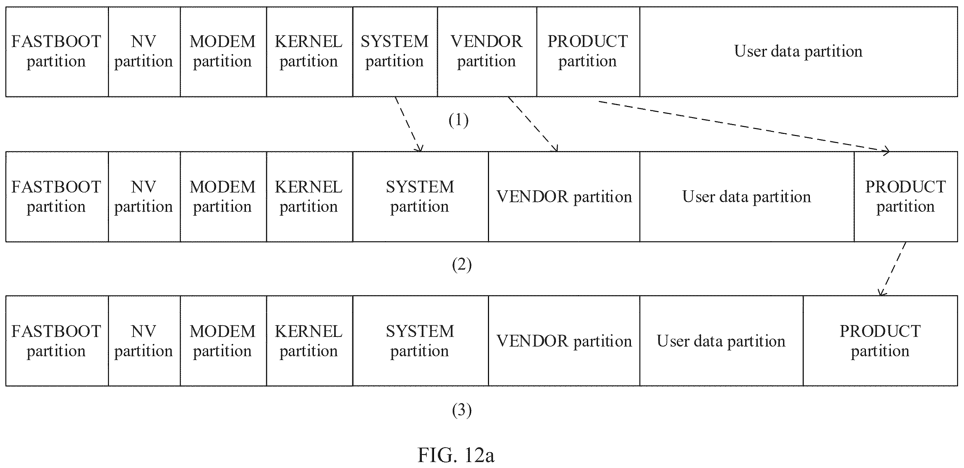

In this embodiment, with reference to the partition structure shown in (1) in FIG. 3, an example in which system partitions whose space is insufficient are the SYSTEM partition and the VENDOR partition is used. The mobile phone may dispose one or more other system partitions whose space is sufficient at the tail of the storage device. As shown in FIG. 12a, the mobile phone may dispose the PRODUCT partition shown in (1) in FIG. 12a at the tail of the storage device, and allocate free space of the head of the storage device to the SYSTEM partition, the VENDOR partition, and the like, with reference to a partition structure shown in (2) in FIG. 12a.

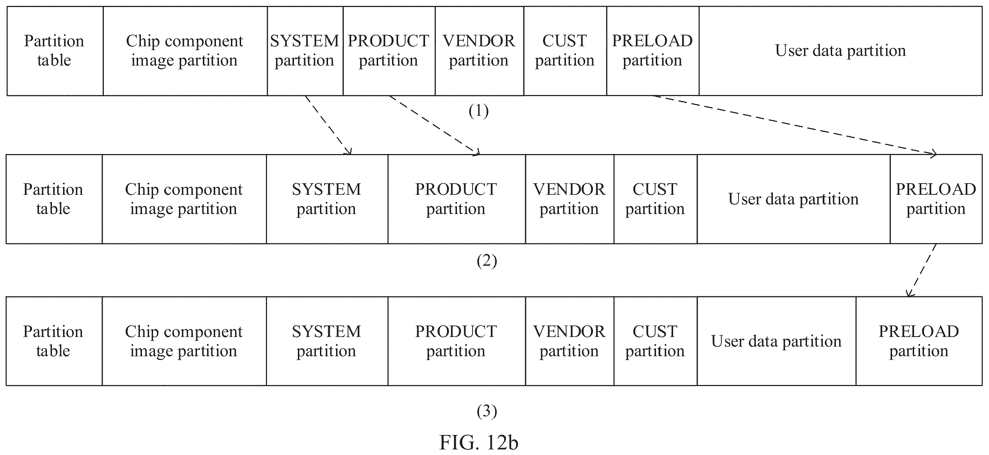

With reference to the partition structure shown in (1) in FIG. 12b, an example in which system partitions whose space is insufficient are the SYSTEM partition and the PRODUCT partition is used. The mobile phone may dispose one or more other system partitions whose space is sufficient at the tail of the storage device. For example, the mobile phone may dispose the PRELOAD partition shown in (1) in FIG. 12b at the tail of the storage device, and allocate free space of the head of the storage device to the SYSTEM partition, the PRODUCT partition, and the like, with reference to a partition structure shown in (2) in FIG. 12b. For descriptions of functions of the partitions in FIG. 12b, refer to descriptions in a related technology. Details are not described in this specification.

In some embodiments, one or more system partitions behind the system partition whose space is insufficient may be disposed at the tail of the storage device. In this way, modification of the address of the system partition disposed at the head of the storage device can be reduced, and system overheads of the mobile phone can be reduced. In the example shown in (2) in FIG. 12a, only the end address of the SYSTEM partition and the start address and the end address of the VENDOR partition are modified, and addresses of other system partitions that are still disposed at the head of the storage device, such as the FASTBOOT partition, the NV partition, the MODEM partition, and the KERNEL partition, do not need to be modified.

Optionally, a location of a system partition that is still disposed at the head of the storage device and whose space is not insufficient may be changed or may not be changed. In (2) in FIG. 12a, an example in which the location is not changed is used, and in (2) in FIG. 12b, an example in which the location is changed is used. This is not limited in this application either.

In some other embodiments, one or more system partitions in front of a system partition whose space is insufficient may alternatively be disposed at the tail of the storage device.

In some scenarios, because the tail of the storage device is occupied by the user data partition, the system partition is disposed at the tail of the storage device, that is, a part of space of the user data partition is re-allocated to the system partition. As shown in (3) in FIG. 12a, a part of space of the user data partition needs to be allocated to the PRODUCT partition. As shown in (3) in FIG. 12b, a part of space of the user data partition needs to be allocated to the PRELOAD partition.

In a specific embodiment, tail free space of the user data partition may be allocated to a system partition disposed at the tail of the storage device.

In some scenarios, data may be stored at a rear location in the user data partition. For example, continuous free space at the rear of the user data partition is less than a size of space required for a system partition to be disposed at the tail of the storage device. It may be understood that a size of space required for the system partition may be an actual size of the system partition, or may be greater than or less than the actual size of the system partition. In this case, the rear data in these user data partitions may be moved to the front free space of the user data partitions. For example, the mobile phone may specifically implement the operation via the data movement module described above. In this way, a part of space of the user data partition is re-allocated to the system partition disposed at the tail of the storage device.

In this way, the start address of the user data partition is not changed, and only the end address of the user data partition and the storage address of the moved data need to be modified. The address of the user data partition and addresses of all the data stored in the user data partition do not need to be all adjusted, so that a risk caused by modifying the storage address of the data in the user data partition can be reduced while time consumed for extending the system partition and system overheads are reduced.

In some embodiments, a location, a size, and the like of the system partition and/or the user data partition may be adjusted by modifying a corresponding parameter of the system partition and/or the user data partition in the partition table. For example, a parameter in the partition table may include but is not limited to one or more of a size, a start address, and an end address of the system partition, and a size and an end address of the user data partition.

In some embodiments, a start address of a system partition disposed at the tail of the storage device may be determined based on a plurality of types of the following: a size of the storage device, a size of space required for the system partition, a preset size, and a start address, an end address, a size of required space, and the like of another system partition disposed at the tail of the storage device. The size of the user data partition may be determined based on a plurality of types of the following: a start address of the user data partition, a size of space required for a system partition disposed at the tail of the storage device, a preset size, and the like.

In a possible implementation, for example, one system partition is disposed at the tail of the storage device. In this case, a start address of the system partition disposed at the tail of the storage device may meet the formula 1, and the size of the user data partition may meet the formula 2.

$$\text{Start address of system partition} = \text{size of storage device} - \text{size of space required for system partition}$$

$$\text{formula 1}$$

$$\text{Size of user data partition} = \text{start address of system partition} - \text{start address of user data partition}$$

$$\text{formula 2}$$

In the formula 1, the "start address of system partition" is the start address of the system partition disposed at the tail of the storage device. In the formula 2, the "start address of system partition" is the "start address of system partition" obtained according to the formula 1. Optionally, the formula 2 may alternatively be transformed into the formula 2.1.

Size of user data partition=start address of user data partition-size of space required for system partition     formula 2.1

For descriptions of parameters in the formula 2.1, refer to descriptions of corresponding parameters in the formula 1 and the formula 2.

In another possible implementation, a plurality of system partitions may be disposed at the tail of the storage device. In this case, a start address of a system partition that is disposed at the tail of the storage device and that is adjacent to the user data partition may meet the formula 3, and the size of the user data partition may meet the formula 4.

Start address of system partition 1=size of storage device-size of space required for all rear system partitions     formula 3

$$\text{Size of user data partition} = \text{start address of system partition 1} - \text{start address of user data partition}$$

$$\text{formula 4}$$

In the formula 3, the "start address of system partition 1" is the start address of the system partition that is disposed at the tail (that is, behind the user data partition) of the storage device and that is adjacent to the user data partition, and the "size of space required for all rear system partitions" is a size of space of required for all system partitions disposed at the tail of the storage device. In the formula 4, the "start address of system partition 1" is the "start address of system partition 1" obtained according to the formula 3. Optionally, similar to the manner in which the formula 2 is transformed into the formula 2.1, the formula 4 may also be transformed into the formula 4.1.

Size of user data partition=start address of user data partition-size of space required for all rear system partitions     formula 4.1

For descriptions of parameters in the formula 4.1, refer to descriptions of corresponding parameters in the formula 3 and the formula 4.

It may be understood that, in this implementation, a start address, an end address, and the like of a system partition that is stored at the tail of the storage device and that is not adjacent to the user data partition may also be determined based on a plurality of types of the following: the size of the storage device, the preset size, and a size, a start address, an end address, and the like of another system partition located at the tail of the storage device.

It may be understood that, in the foregoing implementation, an example in which the rear system partition is disposed at the very end of the storage device is used. If the rear system partition is disposed at a location that is a preset size away from the very end of the storage device, the foregoing formula 1 may be transformed into the formula 5.

Start address of system partition=size of storage device-size of space required for system partition-preset size

formula 5

For descriptions of parameters in the formula 5, refer to descriptions of corresponding parameters in the formula 1. Correspondingly, the "start address of system partition" in the formula 2 may be determined according to the formula 5. Alternatively, the "size of space required for system partition" in the formula 2.1 may be replaced with a sum of the "size of space required for system partition" and the "preset size" in the formula 5.

Similarly, the foregoing formula 3 may also be transformed into the formula 6.

Start address of system partition 1=size of storage device-size of space required for all rear system partitions-preset size

formula 6

For descriptions of parameters in the formula 6, refer to descriptions of corresponding parameters in the formula 3. Correspondingly, the "start address of system partition 1" in the formula 4 may be determined according to the formula 6, or the "size of space required for all rear system partitions" in the formula 4.1 may be replaced with a sum of the "size of space required for all rear system partitions" and the "preset size" in the formula 6.

For example, with reference to the partition structure shown in (2) in FIG. 12a and the foregoing formula 1 and formula 2, a start address of the PRODUCT partition may meet the formula 7, and the size of the user data partition may meet the formula 8.

Start address of PRODUCT partition=size of storage device-size of space required for PRODUCT partition

formula 7

$$\text{Size of user data partition=start address of PRODUCT partition–start address of user data partition}$$

$$\text{formula 8}$$

It may be understood that, in the formula 7 and the formula 8, an example in which the PRODUCT partition is disposed at the very end of the storage device is used. If the PRODUCT partition is disposed at a location that is a preset size away from the very end of the storage device, with reference to the formula 5, the start address of the PRODUCT partition may meet the formula 9.

Start address of PRODUCT partition=size of storage device-size of space required for PRODUCT partition-preset size

formula 9

Correspondingly, in the formula 8, the "start address of PRODUCT partition" may be determined according to the formula 9, and then the "size of user data partition" is determined according to the formula 8.

Similarly, with reference to the partition structure shown in (2) in FIG. 12b and the foregoing formula 1 and formula 2, a start address of the PRELOAD partition may meet the formula 10, and the size of the user data partition may meet the formula 11.

Start address of PRELOAD partition=size of storage device-size of space required for PRELOAD partition

formula 10

$$\text{Size of user data partition=start address of PRELOAD partition–start address of user data partition}$$

$$\text{formula 11}$$

It may be understood that an example in which the PRELOAD partition is disposed at the very end of the storage device is also used for the formula 10 and the formula 11. If the PRELOAD partition is disposed at a location that is a preset size away from the very end of the storage device, for the start address of the PRELOAD partition and the size of the user data partition, refer to a related implementation of the PRODUCT partition described in the formula 9 and the like.

It may be understood that, in this embodiment, an example in which data is stored at a rear location in the user data partition is used. In another embodiment, if no data is stored at a rear location in the user data partition, for example, the rear continuous free space of the user data partition is greater than or equal to the space required for the system partition to be disposed at the tail of the storage device, the mobile phone may not adjust the location of the data stored in the user data partition. In this way, system overheads can be reduced, and a risk caused by modifying the storage address of the data in the user data partition can be further reduced.

In some other embodiments, a system partition whose space is insufficient may alternatively be adjusted to the tail of the storage device, and a system partition whose space is not insufficient is still retained at the head of the storage device. This is not limited in embodiments of this application. For specific implementation of this embodiment, refer to the foregoing related implementation in which the system partition whose space is not insufficient is adjusted to the tail of the storage device, and the system partition whose space is insufficient is retained at the head of the storage device.

In some embodiments, after the partition structure of the mobile phone is the partition structure shown in FIG. 11, (2) in FIG. 12a, (2) in FIG. 12b, and the like, because system software stored in the system partition is updated irregularly, and a size of the system partition may be insufficient to store updated system software, or the like, space of the system partition located at the head of the storage device may still be insufficient. In this case, a manner described above may be further used. For example, a system partition whose space is not insufficient may be adjusted to the tail of the storage device, and a system partition whose space is insufficient is still retained at the head of the storage device. Alternatively, a system partition whose space is insufficient is adjusted to the tail of the storage device, and a system partition whose space is not insufficient is still retained at the head of the storage device, to expand space of the system partition.

In some embodiments, after the partition structure of the mobile phone is the partition structure shown in FIG. 11, (2) in FIG. 12a, (2) in FIG. 12b, and the like, because system software stored in the system partition is updated irregularly, and a size of the system partition may be insufficient to store updated system software, or the like, space of the system partition located at the tail of the storage device may also be insufficient.

In this embodiment, in a possible implementation, the tail free space of the user data partition may continue to be allocated to a system partition that is located at the tail of the storage device and whose space is insufficient. Similarly, in this case, data may also be stored at a rear location of the user data partition. For example, rear continuous free space of the user data partition is less than a size of to-be-expanded space of the system partition whose space is insufficient. Optionally, the size of the to-be-extended space may be greater than or equal to a size of space that the system partition whose space is insufficient lacks.

In this case, the mobile phone may move rear data in these user data partitions to front free space of the user data partition in the manner described above. In this way, a part of space of the user data partition is easily re-allocated to a system partition that is disposed at the tail of the storage device and whose space is insufficient. Optionally, the free space obtained through division from the user data partition may be further re-allocated to a system partition that is at the tail of the storage device and whose space is not insufficient. This is not limited in embodiments of this application.

For example, with reference to the partition structure shown in (2) in FIG. 12a, an example in which a system partition whose space is insufficient is a PRODUCT partition is used. After the mobile phone re-allocates a part of space of the user data partition to the PRODUCT partition, a partition structure of the storage device may be shown in (3) in FIG. 12a.

Similarly, with reference to the partition structure shown in (2) in FIG. 12b, an example in which a system partition whose space is insufficient is a PRELOAD partition is used. After the mobile phone re-allocates a part of space of the user data partition to the PRELOAD partition, a partition structure of the storage device may be shown in (3) in FIG. 12b.

Similarly, in this embodiment, the mobile phone may also adjust a location, a size, and the like of the system partition and/or the user data partition by modifying a corresponding parameter of the system partition and/or the user data partition in the partition table. For descriptions of the parameters in the partition table, refer to the foregoing descriptions.

In some scenarios, for a system partition that is disposed at the tail of the storage device and whose space is insufficient, after a part of space of the user data partition is re-allocated to the system partition, one or more of a start address, an end address, a size, and the like of the system partition change. One or more of a start address, an end address, a size, and the like of another system partition that is disposed at the tail of the storage device and whose space is not insufficient may change or may not change.

For other implementations of embodiments, refer to related implementations of the foregoing embodiments.

In some other embodiments, after the partition structure of the mobile phone is the partition structure shown in FIG. 11, (2) in FIG. 12a, (2) in FIG. 12b, or the like, if space of a system partition located at the tail of the storage device is insufficient, and/or space of a system partition located at the head of the storage device is insufficient, the foregoing virtual volume technology may also be used, and free space of another system partition is used as free space of the system partition whose space is insufficient. Alternatively, space of the another system partition is reduced by modifying an address of the another system partition, and the space of the another system partition is allocated to the system partition whose space is insufficient for use. Optionally, the another system partition may be a system partition located at the head of the storage device, or may be a system partition located at the tail of the storage device.

In some scenarios, the storage device may have different versions such as a high configuration version and a low configuration version. Storage devices of different versions may have different sizes. In some embodiments, a plurality of storage devices of different versions may correspond to one partition table. Alternatively, all storage devices of different versions may correspond to one partition table.

For example, the storage device includes four versions. A storage device of a version 1 and a storage device of a version 2 correspond to a partition table 1, and the partition table 1 may be a partition table adapted to the storage device of the version 1, the storage device of the version 2, or a storage device of another version. It may be understood that the partition table adapted to the storage device may mean that the partition table is designed based on an actual size of the storage device. A storage device of a version 3 and a storage device of a version 4 correspond to a partition table 2, and the partition table 2 may be a partition table adapted to the storage device of the version 3, the storage device of the version 4, or a storage device of another version. The partition table 1 and the partition table 2 may be designed based on actual sizes of storage devices of different versions.

For another example, the storage device includes four versions. A storage device of a version 1, a storage device of a version 2, a storage device of a version 3, and a storage device of a version 4 all correspond to a partition table 3. The partition table 3 may be designed based on an actual size of a storage device of any one of the version 1 to the version 4.

In this embodiment, after the mobile phone obtains the partition table, the mobile phone stores the partition table in the storage device, to read/write the storage device according to the partition table. The partition table obtained by the mobile phone may not be a partition table adapted to the storage device of the current version, that is, the partition table is not designed based on an actual size of the storage device of the current version. Therefore, the mobile phone may further first calibrate the obtained partition table, to ensure that the partition table stored in the storage device is adapted to the storage device.

In this embodiment of this application, on storage devices of different versions, start addresses of user data partitions remain unchanged. In this way, a probability of data loss in the user data partition can be reduced, and reliability of the storage device can be improved. Therefore, in a specific embodiment, when calibrating the partition table, the mobile phone may not need to recalculate the start address of the user data partition, and system overheads can be reduced.

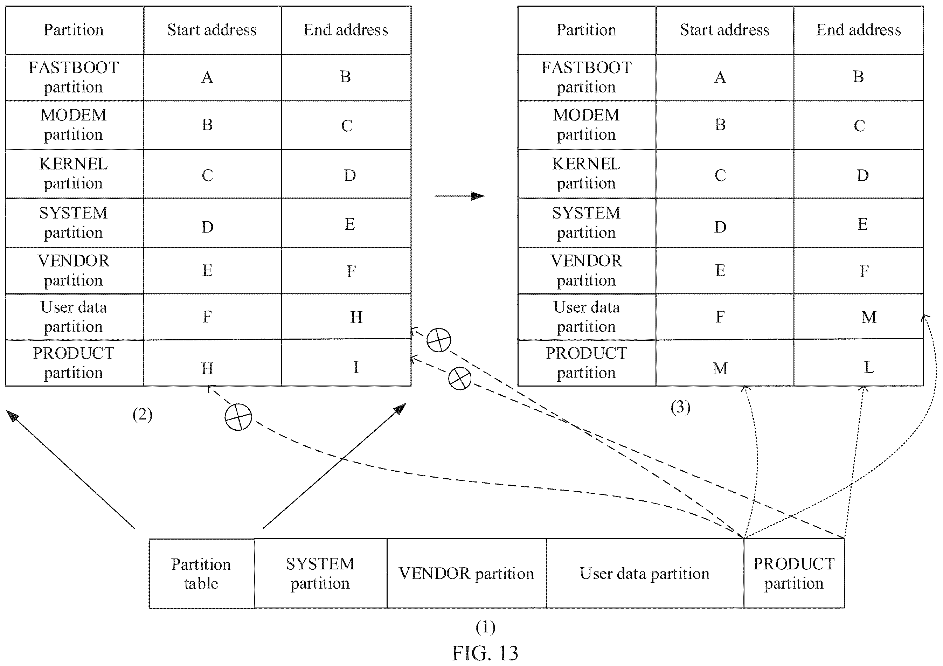

For example, before the mobile phone is delivered from a factory, partition structures shown in FIG. 11, (2) in FIG. 12a, (2) in FIG. 12b, or (1) in FIG. 13 is used. It may be understood that, in (2) in FIG. 12b, (1) in FIG. 13, and the like, an example in which the partition table is stored at the head of the storage device is used. Because start addresses of user data partitions of storage devices of different versions remain unchanged, for the storage devices of different versions, a start address, an end address, and the like of a system partition in front of the user data partition do not change, but a size of the user data partition, a start address, an end address, and the like of a system partition behind the user data partition may change.

In some embodiments, similar to the method for determining the start address of the system partition disposed at the tail of the storage device and the method for determining the size of the user data partition that are described in the foregoing formula 1 to formula 6 and the like, in this method, the mobile phone may determine, based on a size of a current storage device, a preset size, and the like, one or more of a start address and an end address of a system partition disposed at the tail of the storage device, a size of a user data partition, and the like.

In a possible implementation, for example, one system partition is disposed at the tail of the storage device. In this case, a start address of the system partition disposed at the tail of the storage device may meet the formula 12, and the size of the user data partition may meet the formula 13.

$$\text{Start address of system partition} = \text{size of storage device} - \text{size of system partition} \qquad \text{formula 12}$$

$$\text{Size of user data partition} = \text{start address of system partition} - \text{start address of user data partition}$$

$$\text{formula 13}$$

In the formula 12, the "start address of system partition" is the start address of the system partition disposed at the tail of the storage device. The "size of system partition" is an actual size of the system partition. In the formula 13, the "start address of system partition" is the "start address of system partition" obtained according to the formula 12. Optionally, the formula 13 may also use a variant like the foregoing formula 2.1.

In another possible implementation, a plurality of system partitions may be disposed at the tail of the storage device. In this case, a start address of a system partition that is disposed at the tail of the storage device and that is adjacent to the user data partition may meet the formula 14, and the size of the user data partition may meet the formula 15.

$$\text{Start address of system partition } 1 = \text{size of storage device} - \text{size of all rear system partitions}$$

$$\text{formula } 14$$

$$\text{Size of user data partition} = \text{start address of system partition } 1 - \text{start address of user data partition}$$

$$\text{formula } 15$$

In the formula 14, the "start address of system partition 1" is the start address of the system partition that is disposed at the tail of the storage device and that is adjacent to the user data partition, and the "size of all rear system partitions" is a size of space of all system partitions disposed at the tail of the storage device. In the formula 15, the "start address of system partition 1" is the "start address of system partition 1" obtained according to the formula 14. Optionally, the formula 15 may also use a variant shown in the foregoing formula 4.1 or the like.

It may be understood that, in the foregoing implementation, an example in which the rear system partition is disposed at the very end of the storage device is used. Similarly, if the rear system partition is disposed at a location of a preset size at the very end of the storage device, the formula 12 to the formula 15 may also be indicated in a variant like the formula 5 and the formula 6 described above.

With reference to the partition structure described in (1) in FIG. 13, it is assumed that the partition table obtained by the mobile phone is shown in (2) in FIG. 13, and the end address of the user data partition is "H". The start address of the PRODUCT partition is "H", and the end address is "I". In this case, with reference to the formula 12 and the formula 13, the start address of the PRODUCT partition may meet the formula 16, and the size of the user data partition may meet the formula 17.

$$\text{Start address of PRODUCT partition} = \text{size of storage device} - \text{size of PRODUCT partition}$$

$$\text{formula } 16$$

$$\text{Size of user data partition} = \text{start address of PRODUCT partition} - \text{start address of user data partition}$$

$$\text{formula } 17$$

If the start address of the PRODUCT partition obtained through calculation according to the formula 16 is "M", the size of the user data partition is "M-F", and a tail address of the storage device changes from "I" to "L", the partition table shown (2) in FIG. 13 may be updated to the partition table shown in (3) in FIG. 13. It may be understood that sizes of storage devices of different versions may be different. Therefore, in a same address rule, the tail address of the storage device is determined based on an actual size of the storage device.

On the contrary, if it is determined, according to the formula 16, the formula 17, and the like, that the start address and the end address of the PRODUCT partition, the size of the user data partition, and the like do not change, the partition table shown in (2) in FIG. 13 may not be updated.

In some other embodiments, storage devices of different versions may correspond to different partition tables. For example, storage devices of different versions may one-to-one correspond to partition tables. In this way, the mobile phone may directly store the partition table in the storage device without performing the foregoing operation of calibrating the partition table. In this way, system overheads can be reduced.

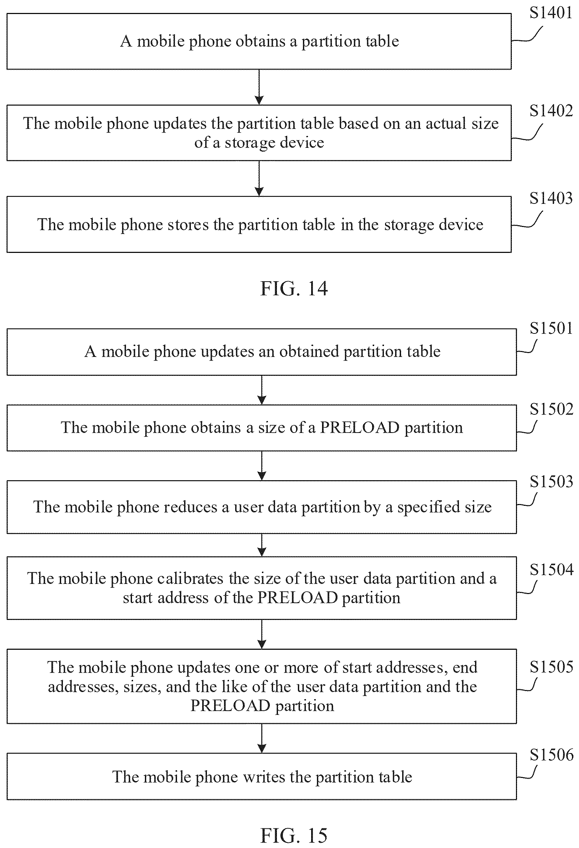

For example, FIG. 14 is a schematic flowchart of a method for updating a partition table according to an embodiment of this application. As shown in FIG. 14, the method includes the following steps.

S1401: A mobile phone obtains a partition table.

S1402: The mobile phone updates the partition table based on an actual size of a storage device.

For the specific implementation of this step, refer to the foregoing related implementations.

S1403: The mobile phone stores the partition table in the storage device.

In some embodiments, in step S1403, when the partition table obtained by the mobile phone is adapted to the storage device, the partition table may be a partition table that is not updated. In some other embodiments, when the partition table obtained by the mobile phone is adapted to the storage device, the partition table may be an updated partition table.

Optionally, in this embodiment of this application, the partition table may be stored at the head of the storage device.

With reference to a scenario in which the partition structure shown in (1) in FIG. 12b is converted into the partition structure shown in (2) in FIG. 12b, the following uses an example in which the partition table obtained by the mobile phone is not adapted to the storage device as a specific embodiment. FIG. 15 is a schematic flowchart of a partition management method according to an embodiment of this application. As shown in FIG. 15, the method includes the following steps.

S1501: A mobile phone updates an obtained partition table.

For the specific implementation of this step, refer to related implementations in FIG. 14.

Optionally, the mobile phone may first store the partition table in the storage device and then update the partition table, or may first update the partition table and then store an updated partition table in the storage device.

S1502: The mobile phone obtains a size of a PRELOAD partition.

For example, when the mobile phone determines to dispose the PRELOAD partition at the location shown in (1) in FIG. 12b at the location shown in (2) in FIG. 12b, the mobile phone may perform step S1502, and the size of the PRELOAD partition may be the same as the size of the PRELOAD partition in (1) in FIG. 12b. In other words, when the mobile phone determines to dispose a system partition in front of a user data partition behind the user data partition, the mobile phone may obtain a size of the system partition.

Optionally, in step S1502, the size of the PRELOAD partition may be an actual size of the PRELOAD partition, or may be a size of space required for the PRELOAD partition.

S1503: The mobile phone reduces the user data partition by a specified size.

The specified size may be the size of the space required for the PRELOAD partition. Optionally, the size of the space required for the PRELOAD partition may be the same as the actual size of the PRELOAD partition, or may be greater than or less than the actual size of the PRELOAD partition.

For example, the mobile phone may reduce the user data partition shown in (1) in FIG. 12b by the specified size.

S1504: The mobile phone calibrates the size of the user data partition and a start address of the PRELOAD partition.

Optionally, in step S1504, the mobile phone may calibrate the size of the user data partition and the start address of the PRELOAD partition according to a method, for example, the foregoing formula 1 to formula 6. For example, after calibration, the size of the user data partition is updated from the size shown in (1) in FIG. 12b to the size shown in (2) in FIG. 12b. The start address of the PRELOAD partition is updated from the start address shown in (1) in FIG. 12b to the start address shown in (2) in FIG. 12b.

S1505: The mobile phone updates one or more of start addresses, end addresses, sizes, and the like of the user data partition and the PRELOAD partition.

For example, the mobile phone may update, based on a calibrated size of the user data partition, a calibrated start address of the PRELOAD partition, and the like, one or more of the start addresses, the end addresses, the sizes, and the like of the user data partition and the PRELOAD partition that are stored in the partition table.

S1506: The mobile phone writes the partition table.

Writing the partition table by the mobile phone is updating the partition table stored in the storage device. Optionally, the mobile phone may further update one or more of a start address, an end address, a size, and the like of one or more other system partitions (for example, the SYSTEM partition, the PRODUCT partition, and the like shown in (1) in FIG. 12b) by writing the partition table.

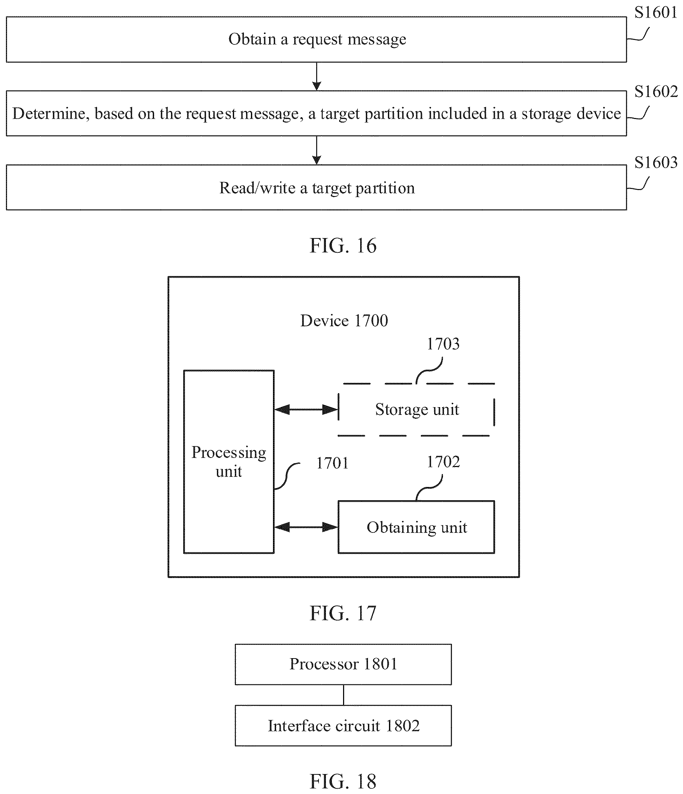

For example, FIG. 16 is a schematic flowchart of a partition management method according to an embodiment of this application. The method may be performed by the device 600 described above, or may be performed by a processor in the device 600, for example, a chip. As shown in FIG. 16, the method includes the following steps.

S1601: Obtain a request message.

The request message may be used to read/write a partition included in a storage device, and the partition includes a user data partition and a plurality of system partitions. The system partitions are configured to store first-type data. For example, the first-type data may include but is not limited to data of system software described above. The user data partition is used to store second-type data. For example, the second-type data may include but is not limited to the foregoing data generated in the process in which the user uses the storage device.

The system partitions include a first system partition and a second system partition, the first system partition is disposed in front of the user data partition, and the second system partition is disposed behind the user data partition. Optionally, data stored in the first system partition may be different from data stored in the second system partition. Optionally, the system partitions may further include one or more system partitions other than the first system partition and the second system partition. A partition structure is shown in (2) in FIG. 12a.

In some embodiments, before step S1401 is performed, both the first system partition and the second system partition are disposed in front of the user data partition, as shown in a partition architecture shown in (1) in FIG. 12a. Optionally, in this embodiment, another system partition may be disposed behind the user data partition. In this case, the second system partition may be disposed behind the user data partition. For example, when space of the first system partition is insufficient, a part or all of space of the second system partition disposed in front of the user data partition is merged into the space of the first system partition, and the second system partition is disposed behind the user data partition.

It may be understood that the space of the first system partition obtained through combination is greater than space of an original first system partition. In some embodiments, a combination operation may be further performed based on space lacking in the first system partition, to determine a specific size of space of the second system partition to be merged into the first system partition. Optionally, the space of the original first system partition may also be divided into another system partition.

In a specific embodiment, the second system partition is disposed behind the user data partition, and a start address of the user data partition remains unchanged. That the second system partition is disposed behind the user data partition may be specifically implemented as follows: First space of the user data partition is set as the second system partition, where the first space includes continuous free space at the tail of the user data partition, as shown in the partition structure shown in (2) in FIG. 12a. Optionally, the first space may be greater than or equal to the second system partition. In this way, it can be ensured that there is sufficient space for storing data in the second system partition.

In some embodiments, before the first space of the user data partition is set as the second system partition, if user data is stored in the first space, the user data is moved to second space of the user data partition for storage, where the second space is different from the first space, and the second space is free space of the user data partition. For example, the second space may be space in front of the first space. Optionally, the second space may be continuous free space, or may not be continuous free space.

In some embodiments, the first space of the user data partition may be set as the second system partition by updating a start address and an end address of the second system partition and a size of the user data partition that are included in a partition table. For the specific implementation, refer to the foregoing related implementations. The partition table corresponds to the storage device, that is, the partition table is a partition table adapted to the storage device, and the partition table is used to index the partition included in the storage device. Optionally, the partition table may be stored at the head of the storage device.

In some embodiments, an updated start address of the second system partition is determined based on the size of the storage device and a size of the first space, and an updated size of the user data partition is determined based on the start address of the user partition and the updated start address of the second system partition (or the size of the first space). Optionally, the size of the first space may be the size of the second system partition.

In some embodiments, when space of the second system partition disposed behind the user data partition is insufficient, third space of the user data partition may be merged into the space of the second system partition, and the third space may also include continuous free space at the tail of the user data partition. In other words, the size of the second system partition may be extended to a size of the third space.

In some embodiments, if user data is stored in the third space, the user data is moved to fourth space of the user data partition for storage, where the fourth space is different from the third space, and the fourth space is free space of the user data partition. Optionally, the fourth space may be space in front of the third space, and the fourth space may be continuous free space, or may not be continuous free space. Optionally, the fourth space and the second space may be the same or different.

S1602: Determine, based on the request message, a target partition included in the storage device.

Optionally, the target partition may include one or more of partitions included in the storage device. This is not limited in this application. In some embodiments, the target partition may be determined based on the request message through a partition table corresponding to the storage device. The partition table may be stored in the storage device, or may be stored in another location.

S1603: Read/write the target partition.

It may be understood that reading/writing the target partition may be reading data from the target partition, writing data into the target partition, or the like.

The foregoing mainly describes the solutions provided in embodiments of this application from the perspective of the method. It may be understood that, to implement the foregoing functions, the device includes corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in embodiments of this application.

In embodiments of this application, functional modules of the device may be obtained through division based on the foregoing method examples. For example, each functional module may be obtained through division based on each corresponding function, or two or more functions may be integrated into one processing unit. The integrated unit may be implemented in a form of hardware, or may be implemented in a form of a software functional module. It should be noted that, in this embodiment of this application, division into the units is an example, and is merely a logical function division. In actual implementation, another division manner may be used.

FIG. 17 is a diagram of a structure of a device according to an embodiment of this application. The device 1700 may be configured to implement the methods recorded in the foregoing method embodiments. For example, the device 1700 may specifically include a processing unit 1701 and an obtaining unit 1702.

The processing unit 1701 is configured to support the device 1700 in performing the processing function described in any one of FIG. 1 to FIG. 16. The obtaining unit 1702 is configured to support the device 1700 in performing the obtaining function in any one of FIG. 1 to FIG. 16.

Optionally, the device 1700 shown in FIG. 17 may further include a storage unit 1703, and the storage unit 1703 stores a program or instructions. When the processing unit 1701 executes the program or the instructions, the device 1700 shown in FIG. 17 can perform the method described in the foregoing method embodiments.

Optionally, the device 1700 shown in FIG. 17 may further include a communication unit. The communication unit is configured to support the device 1700 in performing a step of communication between the device and another device in embodiments of this application.

For technical effect of the device 1700 shown in FIG. 17, refer to the technical effect described in the foregoing method embodiment. Details are not described herein again. The processing unit 1701 in the device 1700 shown in FIG. 17 may be implemented by a processor or a processor-related circuit component, and may be a processor or a processing module. The communication unit may be implemented by a transceiver or a transceiver-related circuit component, and may be a transceiver or a transceiver module.

An embodiment of this application further provides a chip system. As shown in FIG. 18, the chip system includes at least one processor 1801 and at least one interface circuit 1802. The processor 1801 and the interface circuit 1802 may be connected to each other through a line. For example, the interface circuit 1802 may be configured to receive a signal from another apparatus. For another example, the interface circuit 1802 may be configured to send a signal to another apparatus (for example, the processor 1801). For example, the interface circuit 1802 may read instructions stored in the storage, and send the instructions to the processor 1801. When the instructions are executed by the processor 1801, a device is enabled to perform the steps performed by the device in the foregoing embodiments. Certainly, the chip system may further include another discrete component. This is not specifically limited in embodiments of this application.

Optionally, the chip system may include one or more processors. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the storage.

Optionally, there may also be one or more storages in the chip system. The storage may be integrated with the processor, or may be disposed separately from the processor. This is not limited in this application. For example, the storage may be a non-transitory processor, for example, a read-only memory ROM. The memory and the processor may be integrated into a same chip, or may be separately disposed on different chips. A type of the storage and a manner of disposing the storage and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions, and when the computer instructions are run on a device, the device is enabled to perform the method in the foregoing method embodiments.

An embodiment of this application provides a computer program product. The computer program product includes a computer program or instructions. When the computer program or the instructions are run on a computer, the computer is enabled to perform the method in the foregoing method embodiments.

In addition, an embodiment of this application further provides an apparatus. The apparatus may be specifically a chip, a component, or a module. The apparatus may include a processor and a storage that are connected to each other. The storage is configured to store computer-executable instructions. When the apparatus runs, the processor may execute the computer-executable instructions stored in the storage, to enable the apparatus to perform the method in the foregoing method embodiments.

The device, the computer storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on the foregoing descriptions of the implementations, a person skilled in the art may understand that for the purpose of convenient and brief description, division into the foregoing functional modules is only used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. Embodiments may be combined or referenced with each other without conflict. The described apparatus embodiment is merely an example. For example, division into the modules or the units is merely logical function division and there may be other division in practice. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. A part or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A partition management method, wherein the method comprises:

   obtaining a request message, wherein the request message is used to read/write a partition comprised in a storage device, the partition comprises a user data partition and a plurality of system partitions, the system partitions are used to store first-type data, the user data partition is used to store second-type data, the system partitions comprise a first system partition and a second system partition, the first system partition is disposed in front of the user data partition, and the second system partition is disposed behind the user data partition;
   determining, based on the request message, a target partition comprised in the storage device; and
   reading/writing the target partition.

2. The method according to claim 1, wherein before obtaining the request message, both the first system partition and the second system partition are disposed in front of the user data partition; and the method further comprises:

   when space of the first system partition is insufficient, merging a part or all of space of the second system partition disposed in front of the user data partition into the space of the first system partition; and
   disposing the second system partition behind the user data partition.

3. The method according to claim 2, wherein a start address of the user data partition remains unchanged; and disposing the second system partition behind the user data partition comprises:
   setting first space of the user data partition as the second system partition, wherein the first space comprises continuous free space at the tail of the user data partition.

4. The method according to claim 3, wherein the first space is greater than or equal to the second system partition.

5. The method according to claim 4, wherein before setting the first space of the user data partition as the second system partition, the method further comprises:
if user data is stored in the first space, moving the user data to second space of the user data partition for storage, wherein the second space is different from the first space, and the second space is free space of the user data partition.

6. The method according to any one of claims 3 to 5, wherein the first space of the user data partition is set as the second system partition by updating a start address and an end address of the second system partition and a size of the user data partition that are comprised in a partition table, the partition table corresponds to the storage device, and the partition table is used to index the partition comprised in the storage device.

7. The method according to claim 6, wherein an updated start address of the second system partition is determined based on a size of the storage device and a size of the first space, and an updated size of the user data partition is determined based on the start address of the user data partition and the updated start address of the second system partition.

8. The method according to claim 1, wherein the method further comprises:
when space of the second system partition is insufficient, merging third space of the user data partition into the space of the second system partition, wherein the third space comprises continuous free space at the tail of the user data partition.

9. The method according to claim 8, wherein before merging the third space of the user data partition into the space of the second system partition, the method further comprises:
if user data is stored in the third space, moving the user data to fourth space of the user data partition for storage, wherein the fourth space is different from the third space, and the fourth space is free space of the user data partition.

10. The method according to claim 1, wherein before obtaining the request message, the method further comprises:

obtaining a partition table, wherein the partition table comprises at least one of the following parameters: a start address and an end address of the second system partition and a size of the user data partition; and
determining, based on a size of the storage device, whether to update the at least one parameter.

11. A device, comprising a module configured to perform steps in the method according to any one of claims 1 to 10.

12. A device, comprising a processor and a storage, wherein the storage is coupled to the processor, the storage is configured to store program code, the program code comprises instructions, and the processor reads the instructions from the storage, to enable the device to perform the method according to any one of claims 1 to 10.

13. A computer-readable storage medium, wherein the computer-readable storage medium comprises a computer program, and when the computer program is run on a device, the device is enabled to perform the method according to any one of claims 1 to 10.

14. A computer program product, wherein the computer program product comprises a computer program or instructions, and when the computer program or the instructions are run on a computer, the computer is enabled to perform the method according to any one of claims 1 to 10.

| | |
|---|---|
| LBA 0 | Protective MBR |
| LBA 1 | Primary GPT header |
| LBA 2 | |
| | Partition table entry |
| LBA 33 | |
| LBA 34 | Data in partition 1 |
| LBA 35 | Data in partition 2 |
| ⋮ | ... |

FIG. 1

FIG. 2

FIG. 3

| Data of a virtual volume 1 | Free space | | Data of a virtual volume 2 | Free space |
|---|---|---|---|---|

Partition 1            Partition 2

(1)

| Data of a virtual volume 3 | Data of a virtual volume 4 | Free space |
|---|---|---|

Partition 3

(2)

FIG. 4

500

Adjust a size/Move

501

502

Partition size    503    115 GB ◆

Front available space in the partition:    504    0 MB ◆    Rear available space in the partition:    505    4.14 GB ◆

FIG. 5

Device 600

Antenna 1                                     Antenna 2

| Mobile communication module 2G/3G/4G/5G [650] | | Wireless communication module BT/WLAN/GNSS/NFC/IR/FM [660] |

| Displays 1 to N [694] | | |
| Audio module [670] | | Sensor module [680] |
| Cameras 1 to N [693] | | Button [690] |
| Indicator [692] | Processor [610] | Storage device [620] |
| Motor [691] | | SIM card interfaces 1 to N [695] |

| USB interface [630] | Charging management module [640] | Power management module [641] |
| Charging input | | Battery [642] |

FIG. 6

FIG. 7

FIG. 8

FIG. 9

User data partition

(1)

User data partition

(2)

User data partition

(3)

FIG. 10

| FASTBOOT partition | NV partition | MODEM partition | KERNEL partition | User data partition | SYSTEM partition | VENDOR partition | PRODUCT partition |
|---|---|---|---|---|---|---|---|

Storage device

(1)

| FASTBOOT partition | NV partition | MODEM partition | KERNEL partition | User data partition | SYSTEM partition | VENDOR partition | PRODUCT partition | |
|---|---|---|---|---|---|---|---|---|

Storage device

(2)

FIG. 11

EP 4 708 015 A1

| FASTBOOT partition | NV partition | MODEM partition | KERNEL partition | SYSTEM partition | VENDOR partition | PRODUCT partition | User data partition |
|---|---|---|---|---|---|---|---|

(1)

| FASTBOOT partition | NV partition | MODEM partition | KERNEL partition | SYSTEM partition | VENDOR partition | User data partition | PRODUCT partition |
|---|---|---|---|---|---|---|---|

(2)

| FASTBOOT partition | NV partition | MODEM partition | KERNEL partition | SYSTEM partition | VENDOR partition | User data partition | PRODUCT partition |
|---|---|---|---|---|---|---|---|

(3)

FIG. 12a

| Partition table | Chip component image partition | SYSTEM partition | PRODUCT partition | VENDOR partition | CUST partition | PRELOAD partition | User data partition |
|---|---|---|---|---|---|---|---|

(1)

| Partition table | Chip component image partition | SYSTEM partition | PRODUCT partition | VENDOR partition | CUST partition | User data partition | PRELOAD partition |
|---|---|---|---|---|---|---|---|

(2)

| Partition table | Chip component image partition | SYSTEM partition | PRODUCT partition | VENDOR partition | CUST partition | User data partition | PRELOAD partition |
|---|---|---|---|---|---|---|---|

(3)

FIG. 12b

EP 4 708 015 A1

| Partition | Start address | End address |
|---|---|---|
| FASTBOOT partition | A | B |
| MODEM partition | B | C |
| KERNEL partition | C | D |
| SYSTEM partition | D | E |
| VENDOR partition | E | F |
| User data partition | F | H |
| PRODUCT partition | H | I |

(2)

| Partition | Start address | End address |
|---|---|---|
| FASTBOOT partition | A | B |
| MODEM partition | B | C |
| KERNEL partition | C | D |
| SYSTEM partition | D | E |
| VENDOR partition | E | F |
| User data partition | F | M |
| PRODUCT partition | M | L |

(3)

| Partition table | SYSTEM partition | VENDOR partition | User data partition | PRODUCT partition |
|---|---|---|---|---|

(1)

FIG. 13

| A mobile phone obtains a partition table | S1401 |

↓

| The mobile phone updates the partition table based on an actual size of a storage device | S1402 |

↓

| The mobile phone stores the partition table in the storage device | S1403 |

FIG. 14

| A mobile phone updates an obtained partition table | S1501 |

↓

| The mobile phone obtains a size of a PRELOAD partition | S1502 |

↓

| The mobile phone reduces a user data partition by a specified size | S1503 |

↓

| The mobile phone calibrates the size of the user data partition and a start address of the PRELOAD partition | S1504 |

↓

| The mobile phone updates one or more of start addresses, end addresses, sizes, and the like of the user data partition and the PRELOAD partition | S1505 |

↓

| The mobile phone writes the partition table | S1506 |

FIG. 15

| Obtain a request message | S1601 |

| Determine, based on the request message, a target partition included in a storage device | S1602 |

| Read/write a target partition | S1603 |

FIG. 16

Device 1700

1703

Storage unit

Processing unit 1701 1702

Obtaining unit

FIG. 17

| Processor 1801 |

| Interface circuit 1802 |

FIG. 18

## INTERNATIONAL SEARCH REPORT

| International application No. |
| --- |
| **PCT/CN2024/070858** |

**A. CLASSIFICATION OF SUBJECT MATTER**

G06F3/06(2006.01)i

According to International Patent Classification (IPC) or to both national classification and IPC

**B. FIELDS SEARCHED**

Minimum documentation searched (classification system followed by classification symbols)

G06F3/-

Documentation searched other than minimum documentation to the extent that such documents are included in the fields searched

Electronic data base consulted during the international search (name of data base and, where practicable, search terms used)

VCN: 系统, 升级, 更新, 分区, 存储, 空间, 不足, 不够, 用户数据分区, 用户文件区, 后部, 尾部, 后方, 最后 VEN: system, updat+, partition?, portion?, region?, memory, space, enough, insufficient, userdata, tail, behind, last

**C. DOCUMENTS CONSIDERED TO BE RELEVANT**

| Category* | Citation of document, with indication, where appropriate, of the relevant passages | Relevant to claim No. |
| --- | --- | --- |
| X | CN 108595113 A (VIVO COMMUNICATION TECHNOLOGY CO., LTD.) 28 September 2018 (2018-09-28) description, paragraphs [0023]-[0135], and figures 1-4, 6, and 9-10 | 1-14 |
| A | CN 104077234 A (SAMSUNG ELECTRONICS (CHINA) R&D CENTER et al.) 01 October 2014 (2014-10-01) entire document | 1-14 |
| A | CN 110750465 A (HUAWEI DEVICE CO., LTD.) 04 February 2020 (2020-02-04) entire document | 1-14 |
| A | WO 2021185352 A1 (HUAWEI TECHNOLOGY CO., LTD.) 23 September 2021 (2021-09-23) entire document | 1-14 |
| A | KR 20230081556 A (SAMSUNG ELECTRONICS CO., LTD.) 07 June 2023 (2023-06-07) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 March 2024** | **21 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/070858**

| Patent document cited in search report | | | Publication date (day/month/year) | Patent family member(s) | | | Publication date (day/month/year) |
|---|---|---|---|---|---|---|---|
| CN | 108595113 | A | 28 September 2018 | None | | | |
| CN | 104077234 | A | 01 October 2014 | CN | 104077234 | B | 08 March 2017 |
| CN | 110750465 | A | 04 February 2020 | CN | 110750465 | B | 03 November 2023 |
| WO | 2021185352 | A1 | 23 September 2021 | CN | 113495744 | A | 12 October 2021 |
| KR | 20230081556 | A | 07 June 2023 | WO | 2023101294 | A1 | 08 June 2023 |
| | | | | US | 2023168831 | A1 | 01 June 2023 |

Form PCT/ISA/210 (patent family annex) (July 2022)

**REFERENCES CITED IN THE DESCRIPTION**

**Patent documents cited in the description**

• CN 202310700273